(19) Europäisches Patentamt
European Patent Office
Office européen des brevets

(11) **EP 3 963 417 B1**

(12) **EUROPÄISCHE PATENTSCHRIFT**

(45) Veröffentlichungstag und Bekanntmachung des Hinweises auf die Patenterteilung:
**07.05.2025   Patentblatt 2025/19**

(21) Anmeldenummer: **20713632.6**

(22) Anmeldetag: **24.03.2020**

(51) Internationale Patentklassifikation (IPC):
***G05D 1/00*** *(2024.01)*

(52) Gemeinsame Patentklassifikation (CPC):
**G05D 1/0274; G05D 1/0219; G05D 1/024;**
G01C 21/12

(86) Internationale Anmeldenummer:
**PCT/EP2020/058089**

(87) Internationale Veröffentlichungsnummer:
**WO 2020/193513 (01.10.2020 Gazette 2020/40)**

(54) **VERFAHREN ZUR STEUERUNG ZUMINDEST EINES AUTONOMEN ARBEITSGERÄTS**

METHOD FOR CONTROLLING AT LEAST ONE AUTONOMOUS WORKING DEVICE

PROCÉDÉ DE COMMANDE D'AU MOINS UN OUTIL DE TRAVAIL AUTONOME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.03.2019   DE 102019204267**

(43) Veröffentlichungstag der Anmeldung:
**09.03.2022   Patentblatt 2022/10**

(73) Patentinhaber: **Robert Bosch GmbH**
**70442 Stuttgart (DE)**

(72) Erfinder:
• **SCHIRMER, Robert**
**75328 Schoemberg (DE)**
• **STACHNISS, Cyrill**
**53113 Bonn (DE)**
• **BIBER, Peter**
**72072 Tuebingen (DE)**

(56) Entgegenhaltungen:
DE-A1- 102015 119 865     US-A- 5 793 934
US-A1- 2014 297 090

**Beschreibung**

Stand der Technik

Es ist bereits ein Verfahren zur Steuerung, insbesondere zur Navigation, zumindest eines autonomen Arbeitsgeräts, insbesondere eines autonomen Rasenmähers, innerhalb eines Arbeitsbereichs, wobei in zumindest einem Verfahrensschritt Arbeitsbereichsdaten, insbesondere Kartendaten des Arbeitsbereichs, erfasst werden, wobei in zumindest einem Verfahrensschritt Sensordaten des autonomen Arbeitsgeräts erfasst werden, vorgeschlagen worden.
Ferner sei auf die Druckschriften US 5 793 934 A, US 2014/297090 A1 und DE 10 2015 119 865 A1 verwiesen.

Offenbarung der Erfindung

Die Erfindung ist in den beigefügten Ansprüchen beschrieben.
Die Erfindung geht aus von einem Verfahren zur Steuerung, insbesondere zur Navigation, zumindest eines autonomen Arbeitsgeräts, insbesondere eines autonomen Rasenmähers, innerhalb eines Arbeitsbereichs, wobei in zumindest einem Verfahrensschritt Arbeitsbereichsdaten, insbesondere Kartendaten des Arbeitsbereichs, erfasst werden, wobei in zumindest einem Verfahrensschritt Sensordaten des autonomen Arbeitsgeräts erfasst werden.
Es wird vorgeschlagen, dass in zumindest einem Verfahrensschritt zumindest eine Wahrscheinlichkeitskenngröße von möglichen Zuständen des autonomen Arbeitsgeräts innerhalb des Arbeitsbereichs, die zumindest eine Lokalisierungsunsicherheit, insbesondere eine Sensierungs- und/oder Bewegungsunsicherheit, des autonomen Arbeitsgeräts beschreibt, zu einer Ermittlung zumindest eines den Arbeitsbereich zumindest im Wesentlichen vollständig abdeckenden Bewegungspfads des autonomen Arbeitsgeräts ausgewertet wird.
Das autonome Arbeitsgerät ist insbesondere zu einer autonomen Fortbewegung, insbesondere über einen Untergrund, vorgesehen. Vorzugsweise ist das Verfahren zur Steuerung, insbesondere zur Navigation, des autonomen Arbeitsgeräts in einem zumindest im Wesentlichen zweidimensionalen Arbeitsbereich, beispielsweise zur Fortbewegung auf einem Rasen, auf einem Fußboden o. dgl., eingerichtet. Der Arbeitsbereich kann insbesondere als ein Garten, als ein Park, als eine Wohnung, insbesondere als ein Zimmer, oder als ein anderer, einem Fachmann als sinnvoll erscheinender Arbeitsbereich ausgebildet sein. Alternativ ist vorstellbar, dass das Verfahren zur Steuerung, insbesondere zur Navigation, des autonomen Arbeitsgeräts in einem dreidimensionalen Arbeitsbereich, beispielsweise zur Fortbewegung unter Wasser, in der Luft o. dgl., eingerichtet ist. Alternativ zu einer Ausbildung als ein autonomer Rasenmäher ist denkbar, dass das autonome Arbeitsgerät als ein Saugroboter, als ein Rasenvertikutierroboter, als ein Bodenkehrroboter, als ein Schneeräumroboter, als ein Putzroboter, als eine Arbeitsdrohne, als Poolreinigungsroboter oder als ein anderes, einem Fachmann als sinnvoll erscheinendes autonomes Arbeitsgerät ausgebildet ist. Vorzugsweise ist das autonome Arbeitsgerät dazu vorgesehen, während einer Fortbewegung über einen Untergrund den Untergrund zu bearbeiten. Insbesondere ist das autonome Arbeitsgerät dazu vorgesehen, einen als einen Rasen ausgebildeten Untergrund zu mähen, einen als einen Fußboden ausgebildeten Untergrund zu saugen und/oder zu putzen o. dgl. Vorzugsweise umfasst das autonome Arbeitsgerät zu einer Bearbeitung eines Untergrunds zumindest eine Bodenbearbeitungseinheit, insbesondere eine Schneideinheit oder eine Trimmereinheit.
Vorzugsweise umfasst das autonome Arbeitsgerät zumindest eine Antriebseinheit, insbesondere mit zumindest einem Elektromotor, die dazu vorgesehen ist, zumindest eine Antriebsradeinheit des autonomen Arbeitsgeräts zu einer Fortbewegung über einen Untergrund anzutreiben und/oder die Bodenbearbeitungseinheit anzutreiben. Vorzugsweise umfasst das autonome Arbeitsgerät zumindest eine Steuer- und/oder Regeleinheit, die zu einer Steuerung und/oder Regelung der Antriebseinheit und/oder der Antriebsradeinheit eingerichtet ist. Insbesondere werden mittels des Verfahrens Steuerdaten, insbesondere Navigationsdaten, für das autonome Arbeitsgerät generiert. Insbesondere ist die Steuer- und/ oder Regeleinheit dazu eingerichtet, in Abhängigkeit von den Steuerdaten die Antriebseinheit und/oder die Antriebsradeinheit zu steuern und/oder zu regeln. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Bevorzugt ist das autonome Arbeitsgerät, insbesondere zumindest eine Recheneinheit des autonomen Arbeitsgeräts, und/oder zumindest eine externe Recheneinheit, beispielsweise ein Server, ein Mehrzweckcomputer, ein Laptop o. dgl., zu einer Durchführung des Verfahrens eingerichtet. Bevorzugt umfasst die Steuer- und/oder Regeleinheit die Recheneinheit oder ist zumindest teilweise als eine Recheneinheit ausgebildet. Unter "vorgesehen" soll insbesondere speziell ausgestattet und/oder speziell eingerichtet verstanden werden. Unter "eingerichtet" soll insbesondere speziell programmiert und/oder speziell ausgelegt verstanden werden. Darunter, dass ein Objekt zu einer bestimmten Funktion vorgesehen oder eingerichtet ist, soll insbesondere verstanden werden, dass das Objekt diese bestimmte Funktion in zumindest einem Anwendungs- und/oder Betriebszustand erfüllt und/oder ausführt.
In zumindest einem Verfahrensschritt werden bevorzugt Arbeitsbereichsdaten, insbesondere Kartendaten des Arbeitsbereichs, mittels des autonomen Arbeitsgeräts und/oder mittels eines externen Geräts erfasst. Vorzugsweise umfassen die Arbeitsbereichsdaten Informationen über den Arbeitsbereich, wie beispielsweise eine Größe des Arbeitsbereichs, Grenzen des Arbeitsbereichs, insbesondere einen Verlauf von Grenzen des Arbeitsbereichs, eine Umgebung des Arbeitsbereichs, Hindernisse, insbesondere Positionen von Hindernissen, in dem Arbeitsbereich oder andere, einem Fachmann als sinnvoll erscheinende Informationen über den Arbeitsbereich. Die Arbeitsbereichsdaten können insbesondere als eine SLAM (Simultane Lokalisierung und Kartierung)-Karte des Arbeitsbereichs, als ein Satellitenbild des Arbeitsbereichs, als eine, insbesondere digitale, geografische Karte des Arbeitsbereichs, als ein CAD-Modell des Arbeitsbereichs oder als andere, einem Fachmann als sinnvoll erscheinende Arbeitsbereichsdaten ausgebildet sein. Vorzugsweise wird zumindest ein Teil der Arbeitsbereichsdaten mittels des autonomen Arbeitsgeräts, insbesondere mittels Sensoren des autonomen Arbeitsgeräts, erfasst, beispielsweise während zumindest einer Fortbewegung des autonomen Arbeitsgeräts entlang des Arbeitsbereichs, insbesondere einer von einem Benutzer des autonomen Arbeitsgeräts überwachten Einlernfahrt. Alternativ oder zusätzlich ist denkbar, dass zumindest ein Teil der Arbeitsbereichsdaten mittels eines externen Geräts, beispielsweise mittels eines Satelliten, mittels eines Vermessungswerkzeugs, mittels einer Überwachungskamera, mittels eines weiteren autonomen Arbeitsgeräts o. dgl., erfasst wird und insbesondere dem autonomen Arbeitsgerät, insbesondere der Recheneinheit des autonomen Arbeitsgeräts, und/oder der externen Recheneinheit bereitgestellt wird.

In zumindest einem weiteren Verfahrensschritt werden bevorzugt Sensordaten des autonomen Arbeitsgeräts, insbesondere Sensordaten zumindest einer Sensoreinheit des autonomen Arbeitsgeräts, erfasst. Insbesondere wird in Abhängigkeit von den erfassten Sensordaten zumindest ein Sensormodell der Sensoreinheit des autonomen Arbeitsgeräts ermittelt. Vorzugsweise wird das Sensormodell außerhalb des Arbeitsbereichs, insbesondere in einem Labor, ermittelt. Vorzugsweise ist die Sensoreinheit zu einer Erfassung einer Umgebung des autonomen Arbeitsgeräts, insbesondere von Hindernissen in dem Arbeitsbereich, Grenzen des Arbeitsbereichs oder von anderen, einem Fachmann als sinnvoll erscheinenden Orientierungspunkten in dem Arbeitsbereich, eingerichtet. Die Sensoreinheit ist vorzugsweise als eine exterozeptive Sensoreinheit ausgebildet. Vorzugsweise umfasst die Sensoreinheit zumindest einen Laserscanner, insbesondere einen 2D-Laserscanner. Alternativ oder zusätzlich ist vorstellbar, dass die Sensoreinheit zumindest eine Kamera, insbesondere eine stereoskopische Kamera, einen Ultraschallscanner, einen Radarsensor, einen Lidar (Lichtdetektion und Entfernungsmessung)-Sensor o. dgl. umfasst. Die Sensordaten können als eine maximale Detektionsentfernung der Sensoreinheit, als ein Rauschen in einer Messung der Sensoreinheit, als eine Anzahl von erfassten Messwerten pro Messvorgang der Sensoreinheit o. dgl. ausgebildet sein. Beispielsweise ist für eine Sensoreinheit mit einem Laserscanner denkbar, dass die Sensoreinheit eine maximale Detektionsentfernung, insbesondere Scanentfernung, von 8 m, ein gaußverteiltes Rauschen in der Messung mit einer Varianz von 3 cm aufweist, und dass pro Messvorgang, insbesondere pro Scan, der Sensoreinheit 1850 Messwerte erfasst werden. Insbesondere kann in Abhängigkeit von den Sensordaten, insbesondere in Abhängigkeit von dem Sensormodell, zumindest eine Sensierungsunsicherheit des autonomen Arbeitsgeräts ermittelt werden.

Vorzugsweise wird eine Mehrzahl von Wahrscheinlichkeitskenngrößen, insbesondere zumindest eine Wahrscheinlichkeitskenngröße an jeder möglichen Position des autonomen Arbeitsgeräts innerhalb des Arbeitsbereichs, ausgewertet. Die Wahrscheinlichkeitskenngröße ist vorzugsweise als eine, insbesondere gaußsche, Wahrscheinlichkeitsverteilung über mögliche Zustände des autonomen Arbeitsgeräts ausgebildet. Bevorzugt wird eine Orientierung des autonomen Arbeitsgeräts unberücksichtigt gelassen. Im Folgenden wird das Verfahren beispielhaft in Abhängigkeit von einem zweidimensionalen Arbeitsbereich beschrieben. In dem zweidimensionalen Arbeitsbereich wird ein Zustand des autonomen Arbeitsgeräts vorzugsweise durch eine Position $(x, y)$ des autonomen Arbeitsgeräts, insbesondere innerhalb des Arbeitsbereichs, beschrieben, wobei $(x, y)$ ein Koordinatenpaar aus einer Flächenkoordinate $x$ und aus einer weiteren Flächenkoordinate $y$ ist. Vorzugsweise ist die Wahrscheinlichkeitskenngröße mit einem $B$ gekennzeichnet. Insbesondere wird die Wahrscheinlichkeitskenngröße $B$ beschrieben durch eine Normalverteilung $\mathcal{N}(\mu_B, \Sigma_B)$:

$$B \sim \mathcal{N}(\mu_B, \Sigma_B),$$

wobei $\mu_B$ ein Erwartungswert der Wahrscheinlichkeitskenngröße ist, wobei

$$\Sigma_B = \begin{bmatrix} \sigma_x^2 & \sigma_{xy}^2 \\ \sigma_{xy}^2 & \sigma_{yy}^2 \end{bmatrix}$$

und wobei $\sigma^2$ eine Varianz der Wahrscheinlichkeitskenngröße ist. Vorzugsweise wird eine Entwicklung der Wahrscheinlichkeitskenngröße simuliert und modelliert, insbesondere rekursiv mittels eines Erweiterten Kalman-Filters (EKF), mittels einer Gauß-Verteilung, mittels eines Partikelfilters o. dgl., wie das autonome Arbeitsgerät Informationen über einen Zustand des autonomen Arbeitsgeräts durch die, insbesondere exterozeptive, Sensoreinheit gewinnt und durch einen Odometrie-Drift verliert. Unter einem "Odometrie-Drift" soll insbesondere eine, insbesondere mit steigender Weglänge zunehmende, Unsicherheit einer Positionserfassung des autonomen Arbeitsgeräts mittels interozeptiver Sensoren, wie beispielsweise Beschleunigungssensoren, Drehratensensoren, Drehwertgebern o. dgl., verstanden werden. Insbesondere ist die Bewegungsunsicherheit des autonomen Arbeitsgeräts desto größer, je größer der Odometrie-Drift des autonomen Arbeitsgeräts ist.

Die Wahrscheinlichkeitskenngröße beschreibt insbesondere eine Lokalisierungsunsicherheit des autonomen Arbeitsgeräts innerhalb des Arbeitsbereichs. Vorzugsweise ist die Lokalisierungsunsicherheit des autonomen Arbeitsgeräts desto größer, je größer die Sensierungsunsicherheit und die Bewegungsunsicherheit des autonomen Arbeitsgeräts sind. Die Sensierungsunsicherheit ist insbesondere abhängig von den Arbeitsbereichsdaten und von dem Sensormodell der Sensoreinheit des autonomen Arbeitsgeräts. Insbesondere ist die Sensierungsunsicherheit desto kleiner, je mehr und je genauere Arbeitsbereichsdaten erfasst werden und je genauer das Sensormodell ist. Vorzugsweise war das autonome Arbeitsgerät nach einer Fortbewegung entlang des den Arbeitsbereich zumindest im Wesentlichen vollständig abdeckenden Bewegungspfads zumindest einmal an jeder möglichen Position innerhalb des Arbeitsbereichs, hat insbesondere einen zumindest im Wesentlichen vollständigen Untergrund in dem Arbeitsbereich bearbeitet. Unter einem "den Arbeitsbereich zumindest im Wesentlichen vollständig abdeckenden Bewegungspfad" soll insbesondere ein Bewegungspfad verstanden werden, der zumindest 85 % einer Fläche oder eines Volumens des Arbeitsbereichs, bevorzugt zumindest 90 % der Fläche oder des Volumens des Arbeitsbereichs und besonders bevorzugt zumindest 95 % der Fläche oder des Volumens des Arbeitsbereichs abdeckt.

Durch die erfindungsgemäße Ausgestaltung des Verfahrens zur Steuerung zumindest eines autonomen Arbeitsgeräts kann ein vorteilhaft sicherer, insbesondere zumindest im Wesentlichen kollisionsfreier, Bewegungspfad des autonomen Arbeitsgeräts innerhalb eines Arbeitsbereichs ermittelt werden. Vorteilhaft kann auf zusätzliche Verfahrensschritte, wie das Verlegen von Begrenzungsdrähten, verzichtet werden. Vorteilhaft kann ein komfortables und nutzerfreundliches Verfahren zur Steuerung des autonomen Arbeitsgeräts bereitgestellt werden.

Des Weiteren wird vorgeschlagen, dass in zumindest einem Verfahrensschritt die Arbeitsbereichsdaten und die Sensordaten zu einer Ermittlung zumindest einer Lokalisierbarkeitskarte, die eine Lokalisierungswahrscheinlichkeit des autonomen Arbeitsgeräts an jeder Position innerhalb des Arbeitsbereichs angibt, ausgewertet werden. Bevorzugt werden die Arbeitsbereichsdaten als zumindest im Wesentlichen fehlerfrei angenommen. Insbesondere wird die Umgebung des autonomen Arbeitsgeräts, insbesondere zumindest die Grenzen des Arbeitsbereichs, als statisch angenommen. Vorzugsweise werden die Sensordaten zu einer Ermittlung des Sensormodells, insbesondere in einem Labor, ausgewertet. Vorzugsweise werden die, insbesondere ausgewerteten, Arbeitsbereichsdaten zu einer Ermittlung der Lokalisierbarkeitskarte mit dem Sensormodell kombiniert.

Bevorzugt kann in Abhängigkeit von der Lokalisierbarkeitskarte abgeschätzt werden, wie Messungen an jeder Position innerhalb des Arbeitsbereichs eine Lokalisierung des autonomen Arbeitsgeräts beeinflussen, insbesondere unter Nutzung eines im Folgenden beschriebenen Ansatzes. Vorzugsweise wird eine Messung, beispielsweise ein Laserscan, simuliert, insbesondere mittels einer Feldvergleich-Punktwolke oder einer SLAM-Karte und mittels des Sensormodells. Insbesondere wird die simulierte Messung wiederholt um eine vorbestimmte Distanz innerhalb eines vorbestimmten Konvergenzradius translatorisch verschoben und/oder rotiert. Vorzugsweise werden die verschobenen und/oder rotierten Messungen mit den Arbeitsbereichsdaten, insbesondere mit einer Karte des Arbeitsbereichs, kombiniert, insbesondere zu einer Ermittlung einer Kovarianz von Positionen, zu denen konvergiert wurde. Je kleiner die resultierende Kovarianz einer Position ist, desto mehr für eine Lokalisierung nützliche Merkmale, wie beispielsweise ein Vorhandensein eines Eckpunkts, eines Baums, einer Hauswand o. dgl., umfasst ein erfasster Teil der Umgebung des autonomen Arbeitsgeräts an der Position. Je kleiner die resultierende Kovarianz einer Position ist, desto höher ist eine Wahrscheinlichkeit, dass mittels eines Abgleichs von dem Sensormodell mit den Arbeitsbereichsdaten eine tatsächliche Position der Messung wiedergefunden werden kann. Zu einer Ermittlung der Lokalisierbarkeitskarte wird der oben beschriebene Ansatz für jede Position des Arbeitsbereichs angewandt. Alternativ ist denkbar, dass die ermittelte Lokalisierbarkeitskarte weiterverarbeitet wird, beispielhaft als eine Schätzung eines Aktualisierungsschritts eines Erweiterten Kalman-Filters. Vorzugsweise umfasst die Lokalisierbarkeitskarte einen erwarteten Informationsgewinn der, insbesondere exterozeptiven, Sensoreinheit an jeder Position innerhalb des Arbeitsbereichs. Es ist denkbar, dass die Lokalisierbarkeitskarte in weiteren Verfahrensschritten mittels neu erfasster Informationen, insbesondere mittels neu erfasster Arbeitsbereichsdaten und/oder Sensordaten, verbessert wird. Vorteilhaft kann eine A-priori-Lokalisierungswahrscheinlichkeit des autonomen Arbeitsgeräts innerhalb des Arbeitsbereichs ermittelt werden.

Ferner wird vorgeschlagen, dass in zumindest einem Verfahrensschritt die Lokalisierbarkeitskarte mit zumindest einem Bewegungsmodell, insbesondere einem Odometrie-Drift, des autonomen Arbeitsgeräts zu einer Ermittlung der zumindest einen Wahrscheinlichkeitskenngröße kombiniert wird. Insbesondere ist die Lokalisierungsunsicherheit des autonomen Arbeitsgeräts abhängig von dem Bewegungsmodell des autonomen Arbeitsgeräts. Insbesondere nimmt die Lokalisierungsunsicherheit des autonomen Arbeitsgeräts ohne Berücksichtigung der Lokalisierbarkeitskarte mit zunehmender zurückgelegter Pfadlänge in jeder Dimension, beispielsweise in x-Richtung und in $y$-Richtung, zu. Vorzugsweise beeinflusst die Lokalisierbarkeitskarte, insbesondere der Informationsgewinn durch die, insbesondere exterozeptive, Sensoreinheit, die von dem Bewegungsmodell abhängige Lokalisierungsunsicherheit des autonomen Arbeitsgeräts. Beispielsweise ist denkbar, dass während einer Fortbewegung des autonomen Arbeitsgeräts in $y$-Richtung die Lokalisierungsunsicherheit des autonomen Arbeitsgeräts in x-Richtung aufgrund des Odometrie-Drifts des autonomen Arbeitsgeräts zunimmt, aber in y-Richtung aufgrund eines in x-Richtung verlaufenden, von der, insbesondere exterozeptiven, Sensoreinheit erfassten Orientierungsmerkmals, beispielhaft einer Hauswand, konstant bleibt. Vorzugsweise kann durch eine Kombination der Lokalisierbarkeitskarte mit dem Bewegungsmodell des autonomen Arbeitsgeräts eine Lokalisierungswahrscheinlichkeit des autonomen Arbeitsgeräts entlang eines jeden beliebigen Bewegungspfads innerhalb des Arbeitsbereichs vorausberechnet werden. Vorzugsweise bildet die Gesamtheit aller Wahrscheinlichkeitskenngrößen des autonomen Arbeitsgeräts einen Raum, der definiert ist als ein Satz aller Wahrscheinlichkeitsverteilungen über die Zustände des autonomen Arbeitsgeräts und der insbesondere als ein *Position* x *Kovarianzen*-Raum angesehen werden kann. Vorteilhaft kann die auszuwertende Wahrscheinlichkeitskenngröße ermittelt werden.

Weiterhin wird vorgeschlagen, dass in zumindest einem Verfahrensschritt die zumindest eine Wahrscheinlichkeitskenngröße zu einer Auswertung diskretisiert wird, insbesondere durch einen größten Eigenwert der zumindest einen Wahrscheinlichkeitskenngröße. Insbesondere wird der die Gesamtheit aller Wahrscheinlichkeitskenngrößen des autonomen Arbeitsgeräts bildende Raum derart diskretisiert, dass lediglich Wahrscheinlichkeitskenngrößen berücksichtigt werden, die in regelmäßigen Intervallen an Knotenpunkten eines gedachten, den Arbeitsbereich zumindest im Wesentlichen vollständig abdeckenden Gitters angeordnet sind. Vorzugsweise wird jede Wahrscheinlichkeitskenngröße $B$ durch den größten Eigenwert $\bar{\lambda}(B)$ der Wahrscheinlichkeitskenngröße diskretisiert. Insbesondere ist der größte Eigenwert $\bar{\lambda}(B)$ der Wahrscheinlichkeitskenngröße definiert als

$$\bar{\lambda}(B) = \max\big(\lambda_1(B), \lambda_2(B)\big),$$

wobei $\lambda_{1,2}(B)$ Eigenwerte über alle Wahrscheinlichkeitskenngrößen von $\Sigma_B$ im zweidimensionalen $(x, y)$-Raum sind. Vorzugsweise ist eine diskretisierte Kovarianz über alle Wahrscheinlichkeitskenngrößen definiert als

$$\Sigma_{B_{diskretisiert}} = \begin{bmatrix} \bar{\lambda}(B)^2 & 0 \\ 0 & \bar{\lambda}(B)^2 \end{bmatrix}.$$

Vorteilhaft kann die Wahrscheinlichkeitskenngröße zeitsparend ausgewertet werden. Vorteilhaft kann der Bewegungspfad des autonomen Arbeitsgeräts nutzerfreundlich zeitsparend ermittelt werden.

Zudem wird vorgeschlagen, dass in zumindest einem Verfahrensschritt die zumindest eine Wahrscheinlichkeitskenngröße, insbesondere die zumindest eine diskretisierte Wahrscheinlichkeitskenngröße, zu einer Auswertung in Unsicherheitslevel quantisiert wird. Insbesondere wird jede Wahrscheinlichkeitskenngröße, insbesondere jede diskretisierte Wahrscheinlichkeitskenngröße, in eines von $\|U\|$ Intervallen von Unsicherheit mit einer Größe $\delta$ quantisiert. Alternativ ist vorstellbar, dass die Wahrscheinlichkeitskenngrößen, insbesondere die diskretisierten Wahrscheinlichkeitskenngrößen, in Intervalle von Unsicherheit variabler Größe, insbesondere verschieden große Intervalle von Unsicherheit, quantisiert werden. Vorzugsweise ist $\|U\|$ definiert als

$$\|U\| = \frac{\lambda_{max} - \lambda_{min}}{\delta},$$

wobei $\lambda_{max}$ einen größten Eigenwert einer jeden erwarteten Wahrscheinlichkeitskenngröße während eines Betriebs des autonomen Arbeitsgeräts und $\lambda_{min}$ einen kleinsten Eigenwert einer jeden erwarteten Wahrscheinlichkeitskenngröße während eines Betriebs des autonomen Arbeitsgeräts darstellt. Bevorzugt bildet ein jedes $u_b \in U$ ein Unsicherheitslevel einer Wahrscheinlichkeitskenngröße $B$, wobei ein Unsicherheitslevel $u_b$ definiert ist als

$$u_b = \left\lceil \frac{\bar{\lambda}(B) - \lambda_{min}}{\delta} \right\rceil.$$

Vorteilhaft kann eine weiter zeitsparende und nutzerfreundliche Auswertung der Wahrscheinlichkeitskenngröße und Ermittlung des Bewegungspfads des autonomen Arbeitsgeräts ermöglicht werden.

Des Weiteren wird vorgeschlagen, dass in zumindest einem Verfahrensschritt zu einer Ermittlung des Bewegungspfads zumindest eine Kollisionswahrscheinlichkeit des autonomen Arbeitsgeräts mit zumindest einem Hindernis in dem Arbeitsbereich, die in Abhängigkeit von einer Position des Hindernisses und der zumindest einen Wahrscheinlichkeitskenngröße, insbesondere der Lokalisierungsunsicherheit des autonomen Arbeitsgeräts, ermittelt wird, berücksichtigt wird. Insbesondere wird die Kollisionswahrscheinlichkeit des autonomen Arbeitsgeräts an jeder möglichen Position des autonomen Arbeitsgeräts innerhalb des Arbeitsbereichs ermittelt und zur Ermittlung des Bewegungspfads berücksichtigt. Je größer die Lokalisierungsunsicherheit des autonomen Arbeitsgeräts an einer bestimmten Position innerhalb des Arbeitsbereichs ist, desto größer ist insbesondere ein Wahrscheinlichkeitsbereich um die Position, in dem das autonome Arbeitsgerät voraussichtlich angeordnet ist. Vorzugsweise wird bei einer Überschneidung des Wahrscheinlichkeitsbereichs mit dem zumindest einen Hindernis, insbesondere bei einer zumindest teilweisen Anordnung des Hindernisses in dem Wahrscheinlichkeitsbereich, eine Kollision des autonomen Arbeitsgeräts mit dem Hindernis angenommen. Vorzugsweise ist der Wahrscheinlichkeitsbereich elliptisch ausgebildet, insbesondere wenn das autonome Arbeitsgerät in x-Richtung und in y-Richtung verschiedene Lokalisierungsunsicherheiten aufweist. Insbesondere ist denkbar, dass in y-Richtung aufgrund einer geringen Lokalisierungsunsicherheit des autonomen Arbeitsgeräts eine zumindest im Wesentlichen kollisionsfreie Fortbewegung und in x-Richtung aufgrund einer großen Lokalisierungsunsicherheit des autonomen Arbeitsgeräts eine mögliche Kollision mit einem Hindernis ermittelt wird. Vorzugsweise wird der Bewegungspfad des autonomen Arbeitsgeräts in Abhängigkeit von den ermittelten Kollisionswahrscheinlichkeiten des autonomen Arbeitsgeräts angepasst. Beispielsweise ist denkbar, dass bei einer Fortbewegungsstrategie des autonomen Arbeitsgeräts entlang von in y-Richtung verlaufenden parallelen Bahnen ein Bewegungspfad ermittelt wird, bei dem das autonome Arbeitsgerät in Abhängigkeit von einer ermittelten möglichen Kollision mit einem Hindernis in x-Richtung vor Beendigung einer Bahn auf eine weitere, parallele Bahn entgegen der Richtung des Hindernisses wechselt. Vorteilhaft kann ein besonders sicherer, insbesondere zumindest im Wesentlichen kollisionsfreier, Bewegungspfad des autonomen Arbeitsgeräts in dem Arbeitsbereich ermittelt werden.

Ferner wird vorgeschlagen, dass in zumindest einem Verfahrensschritt unter Berücksichtigung der zumindest einen Wahrscheinlichkeitskenngröße, insbesondere der Lokalisierungsunsicherheit des autonomen Arbeitsgeräts, mögliche Teilbewegungspfade des autonomen Arbeitsgeräts, die zumindest ein hindernisfreies Teilgebiet des Arbeitsbereichs zumindest im Wesentlichen vollständig abdecken, ermittelt werden, insbesondere in Form eines generalisierten Rundreiseproblems. Insbesondere umfasst der Arbeitsbereich eine Mehrzahl von hindernisfreien Teilgebieten, deren Verlauf, insbesondere deren Grenzen, zumindest teilweise von Positionen von Hindernissen innerhalb des Arbeitsbereichs, von den Grenzen des Arbeitsbereichs und/oder von einer Bewegungsstrategie des autonomen Arbeitsgeräts, beispielhaft einem Abfahren von parallelen Bahnen, abhängig ist/sind. Es ist denkbar, dass die möglichen Teilbewegungspfade unter Berücksichtigung der zumindest einen Wahrscheinlichkeitskenngröße, insbesondere der Lokalisierungsunsicherheit des autonomen Arbeitsgeräts, und insbesondere zusätzlich unter Berücksichtigung von zumindest einem weiteren Parameter ermittelt werden. Der weitere Parameter kann insbesondere als eine gewünschte, insbesondere maximale oder minimale, Anzahl von Drehungen des autonomen Arbeitsgeräts, als ein zu erzeugendes Bearbeitungsmuster, insbesondere Mähmuster, als eine gewünschte, insbesondere maximale oder minimale, Distanz des autonomen Arbeitsgeräts zu Hindernissen, als eine gewünschte, insbesondere maximale oder minimale, Pfadlänge, als eine Energieeffizienz oder als ein anderer, einem Fachmann als sinnvoll erscheinender Parameter ausgebildet sein.

Bevorzugt werden die Teilgebiete des Arbeitsbereichs, insbesondere die möglichen, die Teilgebiete abdeckenden Teilbewegungspfade des autonomen Arbeitsgeräts, mittels eines Boustrophedon-Ansatzes, insbesondere mittels eines Boustrophedon-Abdeckungs-Pfadplanungs-Algorithmus, unter Berücksichtigung der Wahrscheinlichkeitskenngrößen ermittelt. Alternativ ist denkbar, dass die Teilgebiete des Arbeitsbereichs, insbesondere die möglichen, die Teilgebiete abdeckenden Teilbewegungspfade des autonomen Arbeitsgeräts, mittels eines Zufälligen-Muster-Ansatzes (random patterns approach), mittels eines Gitter-Rundreiseproblem-Ansatzes (grid TSP approach), mittels eines Neuronalen-Netzwerk-Ansatzes (neural network approach), mittels eines Gitter-lokalen-Energie-Ansatzes (grid local energy approach), mittels eines Isolinien-Ansatzes (contour line approach), mittels eines Konvex-skalierbaren-Parallelberechnungs-Ansatzes (convex spp approach) oder mittels eines anderen, einem Fachmann als sinnvoll erscheinenden Ansatzes unter Berücksichtigung der Wahrscheinlichkeitskenngrößen ermittelt werden. Vorzugsweise werden als Eingangsgrößen zur Ermittlung der hindernisfreien Teilgebiete, insbesondere der möglichen, die Teilgebiete abdeckenden Teilbewegungspfade des autonomen Arbeitsgeräts, zumindest die Grenzen des Arbeitsbereichs, insbesondere in Form von Polygonen, eine Morse-Funktion und eine Bahnbreite genutzt. Mittels des Boustrophedon-Ansatzes wird vorzugsweise ein Muster von parallelen Bahnen erzeugt, das den zumindest im Wesentlichen vollständigen Arbeitsbereich abdeckt und das insbesondere Hindernisse durch eine Aufteilung des Arbeitsbereichs in die hindernisfreien Teilgebiete berücksichtigt. Alternativ, insbesondere in Abhängigkeit von einem verschieden von dem Boustrophedon-Ansatz ausgebildeten Ansatz, ist eine Erzeugung von anderen Mustern, beispielsweise von zufälligen Mustern, von Spiralbahnen, von verästelten Baummustern o. dgl., vorstellbar. Vorzugsweise ist ein hindernisfreies Teilgebiet durch zwei verschiedene Fortbewegungsarten des autonomen Arbeitsgeräts zumindest im Wesentlichen vollständig von dem autonomen Arbeitsgerät abdeckbar, insbesondere abfahrbar. Insbesondere ist eine erste Fortbewegungsart des autonomen Arbeitsgeräts als eine Fortbewegung entlang der parallelen Bahnen ausgebildet. Insbesondere ist eine zweite Fortbewegungsart des autonomen Arbeitsgeräts als eine Fortbewegung entlang der Hindernisse ausgebildet. Vorzugsweise gibt es unter Berücksichtigung der zwei Fortbewegungsarten vier verschiedene Möglichkeiten, insbesondere Teilbewegungspfade, zu einer Abdeckung eines zumindest im Wesentlichen vollständigen hindernisfreien Teilgebiets. Insbesondere weist jeder der vier Teilbewegungspfade einen Startpunkt, an dem das autonome Arbeitsgerät beginnt, das Muster abzufahren und einen Austrittspunkt, an dem der Teilbewegungspfad endet, auf. Beispielsweise ist für ein zumindest im Wesentlichen rechteckiges hindernisfreies Teilgebiet denkbar, dass ein Startpunkt eines ersten möglichen Teilbewegungspfads an einem oberen linken Eckpunkt (*tl*) des Teilgebiets, ein Startpunkt eines zweiten möglichen Teilbewegungspfads an einem unteren linken Eckpunkt (*bl*) des Teilgebiets, ein Startpunkt eines dritten möglichen Teilbewegungspfads an einem oberen rechten Eckpunkt (*tr*) des Teilgebiets und ein Startpunkt eines vierten möglichen Teilbewegungspfads an einem unteren rechten Eckpunkt (*br*) des Teilgebiets angeordnet ist.

Vorzugsweise werden die Teilbewegungspfade in Form eines generalisierten Rundreiseproblems ermittelt, wobei das generalisierte Rundreiseproblem definiert ist über einen Graphen *G*, wobei

$$G = (V, E, w),$$

wobei V Knoten, E Kanten und w Kantengewichtungen sind. Vorzugsweise sind die Knoten V aufgeteilt in paarweise disjunkte Sätze

$$V = \bigcup_{i \in A} V_i,$$

wobei *A* ein Satz von hindernisfreien Teilgebieten mit Größe *n* ist und wobei

$$V_i = \bigcup_{sp \in \{tl, tr, bl, br\}} v_{i,sp},$$

wobei ein Knoten $v_{i,sp}$ zu verstehen ist als eine Lösung eines hindernisfreien Teilgebiets *i* ausgehend von einem Startpunkt *sp*. Insbesondere ist das generalisierte Rundreiseproblem als ein Problem einer Ermittlung, insbesondere einer Berechnung, einer kostengünstigsten Rundreise, die genau einen Knoten von jedem disjunkten Satz $V_i$ umfasst, ausgebildet. Bevorzugt wird ein Satz von Knoten V ermittelt, insbesondere berechnet, der einen Knoten für jede Lösung aller hindernisfreier Teilgebiete des Arbeitsbereichs, Startpunkte und Wahrscheinlichkeitskenngrößen, insbesondere Unsicherheitslevel, umfasst. Insbesondere wird eine Strategie ermittelt, die dazu eingerichtet ist, einen Knoten $v_{i,sp,u}$ zu lösen, der insbesondere zu verstehen ist als eine Lösung eines hindernisfreien Teilgebiets *i* ausgehend von einem Startpunkt *sp* mit einem Unsicherheitslevel *u*. Insbesondere wird zur Lösung des Knotens $v_{i,sp,u}$ eine erwartete Entwicklung der Wahrscheinlichkeitskenngröße entlang des Bewegungspfads nachverfolgt und werden sämtliche Bewegungen des autonomen Arbeitsgeräts, die zu Kollisionen führen könnten, vermieden durch vorzeitiges Wechseln auf eine benachbarte parallele Bahn. Insbesondere können in Abhängigkeit von der Strategie, insbesondere der Bewegungsstrategie, unabgedeckte, insbesondere unabgefahrene, Regionen innerhalb eines hindernisfreien Teilgebiets verbleiben. Vorzugsweise werden die unabgedeckten Regionen als unabhängige hindernisfreie Teilgebiete angesehen. Insbesondere werden unter Berücksichtigung der zumindest einen Wahrscheinlichkeitskenngröße, insbesondere der Lokalisierungsunsicherheit des autonomen Arbeitsgeräts, mögliche Teilbewegungspfade des autonomen Arbeitsgeräts, die die unabgedeckten Regionen zumindest im Wesentlichen vollständig abdecken, ermittelt, insbesondere in Form eines lokalen generalisierten Rundreiseproblems. Vorzugsweise wird eine unabgedeckte Region, insbesondere eine Fläche der unabgedeckten Region, gegen eine zurückzulegende Distanz bis zu der unabgedeckten Region abgewogen, insbesondere mittels eines Parameters $\beta$. Beispielsweise ist denkbar, dass zu einer Abdeckung einer unabgedeckten Region mit einer vergleichsweise kleinen Fläche ein Umweg von 50 m vermieden wird.

Vorzugsweise wird ein Satz von Knoten $V_i$ für jedes hindernisfreie Teilgebiet ermittelt, insbesondere berechnet, durch Iterieren über alle hindernisfreien Teilgebiete, Startpunkte und Unsicherheitslevel, insbesondere mittels folgender Formel:

$$V_i = \{v_{i,sp,u}\},$$

wobei $\forall i \in A$, wobei $sp \in$ *{tl, tr, bl, br}* und wobei $u \in U$. Die Knoten werden vorzugsweise zur Bildung von V verbunden. Insbesondere umfasst jeder Knoten eine induzierte Austrittswahrscheinlichkeitskenngröße $B_{austritt}(v_{i,sp,u})$, eine Pfadlänge $d(v_{i,sp,u})$ und eine verbleibende unabgedeckte Region $o(v_{i,sp,u})$, insbesondere zu einer Ermittlung, insbesondere Berechnung, von Knotenkosten $c(v_{i,sp,u})$, insbesondere mittels folgender Formel:

$$c(v_{i,sp,u}) = d(v_{i,sp,u}) + \beta \times o(v_{i,sp,u}).$$

Vorzugsweise werden in Abhängigkeit von den Knotenkosten $c(v_{i,sp,u})$ die Kantengewichtungen *w* ermittelt, insbesondere berechnet. Vorteilhaft kann ein nutzerfreundliches Verfahren zu einer zeitsparenden Ermittlung von möglichen Bewegungspfaden innerhalb der hindernisfreien Teilgebiete unter Berücksichtigung, insbesondere Auswertung, der Wahrscheinlichkeitskenngrößen bereitgestellt werden.

Weiterhin wird vorgeschlagen, dass in zumindest einem Verfahrensschritt unter Berücksichtigung der zumindest einen Wahrscheinlichkeitskenngröße, insbesondere der Lokalisierungsunsicherheit des autonomen Arbeitsgeräts, mögliche Übergangspfade des autonomen Arbeitsgeräts zwischen einer Mehrzahl von Teilgebieten des Arbeitsbereichs ermittelt werden. Insbesondere werden unter Berücksichtigung der zumindest einen Wahrscheinlichkeitskenngröße mögliche Übergangspfade des autonomen Arbeitsgeräts zwischen aneinander angrenzenden Teilgebieten des Arbeitsbereichs ermittelt. Insbesondere werden zu einer Ermittlung der Übergangspfade die Kanten $E$ und die Kantengewichtungen w ermittelt, insbesondere berechnet. Vorzugsweise umfassen die Kantengewichtungen Zielknotenkosten und Übergangskosten. Bevorzugt werden die Kantengewichtungen $w$ gemäß folgender Formel ermittelt:

$$w(v_i, v_j) = c(v_i, v_j) + c(v_j),$$

**wobei** $\forall i, j \in V$, wobei $v_i = v_{i,sp,u}$, wobei $i \in A$, wobei $sp \in \{tl, tr, bl, br\}$, wobei $u \in U$ und wobei $c(v_i, v_j)$ die Übergangskosten eines Übergangs zwischen einem hindernisfreien Teilgebiet $i$ und einem weiteren hindernisfreien Teilgebiet $j$ sind. Der Übergang findet insbesondere statt zwischen $B_{austritt}(v_i)$, dem Startpunkt des weiteren Teilgebiets und den Unsicherheitslevels von $v_j$. Vorzugsweise wird ein Übergangspfad zwischen zwei Teilgebieten ermittelt, der einen Kompromiss zwischen einer finalen Lokalisierungsunsicherheit und Pfadlänge darstellt. Insbesondere wird eine zurückgelegte Pfadlänge mit einer angesammelten Lokalisierungsunsicherheit mittels eines Kompromissparameters $\alpha$, insbesondere durch Nutzung eines Wellenfront-Algorithmus, kombiniert. Vorzugsweise wird ein Übergangspfad für alle (Austrittswahrscheinlichkeitskenngröße, Startpunkt)-Paare ermittelt, insbesondere berechnet, der in Abhängigkeit von $\alpha$ und von der Lokalisierungsunsicherheit des autonomen Arbeitsgeräts an einem Zielknoten $v_j$ ein Unsicherheitslevel ($B_{austritt}(v_i)$, ($v_{i,sp,u_{induziert}}$)) induziert, wobei $u_{induziert} \in U$. Insbesondere werden alle Kantengewichtungen derart ermittelt, insbesondere berechnet, dass Kanten, an denen gute Übergangspfade ermittelbar sind, als Kanten mit endlichen Kantenkosten ausgebildet sind, insbesondere gemäß folgender Formel: $w(v_{i_1,sp_1,u_{b1}}, \quad v_{i_2,sp_2,u_{b2}})$ =

$$\begin{cases} c(v_{i_2,sp_2,u_{b2}}) \\ +c(v_{i_1,sp_1,u_{b1}}, v_{i_2,sp_2,u_{b2}}) \quad wenn\ u_{b2} = u_{induziert} \\ \infty \qquad\qquad\qquad\qquad sonst \end{cases}.$$

Vorzugsweise umfasst jeder Knoten $(n - 1) \times 4 \times \|U\|$ Kanten. Insbesondere gibt es $4 \times \|U\|$ Knoten pro hindernisfreiem Teilgebiet. Für den zumindest im Wesentlichen vollständigen Arbeitsbereich ergeben sich insbesondere $16 \times \|U\|^2 \times (n - 1) \times n$ Kanten, wobei $n$ eine Anzahl von hindernisfreien Teilgebieten in dem Arbeitsbereich ist. Vorzugsweise wird lediglich ein einzelner Übergang zwischen jedem (Austrittswahrscheinlichkeitskenngröße, Startpunkt)-Paar berücksichtigt. Insbesondere ergibt sich unter Berücksichtigung eines einzelnen Übergangs zwischen jedem (Austrittswahrscheinlichkeitskenngröße, Startpunkt)-Paar eine Anzahl von endlichen Kanten von $16 \times \|U\| \times (n - 1) \times n$. Vorteilhaft kann ein nutzerfreundliches Verfahren zu einer zeitsparenden Ermittlung von möglichen Übergangspfaden zwischen einer Mehrzahl von Teilgebieten unter Berücksichtigung, insbesondere Auswertung, der Wahrscheinlichkeitskenngrößen bereitgestellt werden.

Zudem wird vorgeschlagen, dass in zumindest einem Verfahrensschritt der Bewegungspfad des autonomen Arbeitsgeräts zu einer einmaligen zumindest im Wesentlichen vollständigen Abdeckung jedes Teilgebiets des Arbeitsbereichs in Abhängigkeit von den möglichen Teilbewegungspfaden und Übergangspfaden des autonomen Arbeitsgeräts ermittelt wird, insbesondere in Form eines generalisierten Rundreiseproblems. Insbesondere wird ein zusammenhängender Bewegungspfad des autonomen Arbeitsgeräts zu einer einmaligen zumindest im Wesentlichen vollständigen Abdeckung jedes Teilgebiets des Arbeitsbereichs in Abhängigkeit von den möglichen Teilbewegungspfaden und Übergangspfaden des autonomen Arbeitsgeräts ermittelt, insbesondere in Form eines generalisierten Rundreiseproblems. Vorzugsweise wird jeweils ein einzelner Teilbewegungspfad pro jedem Teilgebiet des Arbeitsbereichs mittels der Übergangspfade zu einem zusammenhängenden Bewegungspfad verbunden. Vorzugsweise wird eine Lösung des generalisierten Rundreiseproblems mittels eines Greedy-Algorithmus initialisiert. Insbesondere wird der Greedy-Algorithmus durch ein iteratives Hinzufügen eines nächstgelegenen Knotens von jedem Teilgebiet bis eine vollständige Runde gefunden ist, erstellt. Eine mittels des Greedy-Algorithmus ermittelte Anfangslösung wird vorzugsweise, insbesondere mittels lokaler Suchoperatoren für das generalisierte Rundreiseproblem, verbessert, insbesondere bis ein Abschlusskriterium erfüllt wird. Bevorzugt wird das generalisierte Rundreiseproblem mit einer Priorität hinsichtlich einer Ermittlung eines Bewegungspfads, der eine minimale Anzahl von Kollisionen des autonomen Arbeitsgeräts umfasst, gelöst. Alternativ ist denkbar, dass das generalisierte Rundreiseproblem mit einer Priorität hinsichtlich einer Ermittlung eines Bewegungspfads, der eine minimale erwartete mittlere Lokalisierungsunsicherheit aufweist, hinsichtlich einer Ermittlung eines Bewegungspfads, der eine minimale Pfadlänge aufweist, hinsichtlich einer Ermittlung eines Bewegungspfads, der ästhetisch, insbesondere symmetrisch, ansprechende Bearbeitungsmuster, insbesondere Mähmuster, aufweist, oder mit einer Kombination von verschiedenen Prioritäten, insbesondere einer Kombination der vorgenannten Prioritäten, gelöst wird. Vorteilhaft kann ein zusammenhängender, den zumindest im Wesentlichen vollständigen Arbeitsbereich abdeckender, sicherer, insbesondere kollisionsarmer, Bewegungspfad des autonomen Arbeitsgeräts ermittelt werden.

Des Weiteren geht die Erfindung aus von einem autonomen Arbeitsgerät, insbesondere von dem vorgenannten autonomen Arbeitsgerät, insbesondere von einem autonomen Rasenmäher, mit zumindest einer Navigationseinheit zu einer Navigation innerhalb eines Arbeitsbereichs, mit zumindest einer Sensoreinheit zu einer Erfassung von Arbeitsbereichsdaten und mit zumindest einer Recheneinheit.

Es wird vorgeschlagen, dass die Recheneinheit dazu eingerichtet ist, zumindest eine Wahrscheinlichkeitskenngröße von möglichen Zuständen des autonomen Arbeitsgeräts innerhalb des Arbeitsbereichs, die zumindest eine Lokalisierungsunsicherheit, insbesondere eine Sensierungs- und/oder Bewegungsunsicherheit, des autonomen Arbeitsgeräts beschreibt, auszuwerten, insbesondere zu einer Ermittlung zumindest eines den Arbeitsbereich zumindest im Wesentlichen vollständig abdeckenden Bewegungspfads des autonomen Arbeitsgeräts. Insbesondere ist die Recheneinheit dazu eingerichtet, das vorhergehend beschriebene Verfahren durchzuführen. Vorzugsweise ist die Recheneinheit dazu eingerichtet, ermittelte Navigationsdaten der Navigationseinheit zu einer Navigation des autonomen Arbeitsgeräts innerhalb des Arbeitsbereichs bereitzustellen. Bevorzugt umfasst die Steuer- und/oder Regeleinheit des autonomen Arbeitsgeräts die Navigationseinheit. Vorteilhaft kann ein autonomes Arbeitsgerät bereitgestellt werden, das zu einer nutzerfreundlichen, insbesondere eigenständigen, Ermittlung eines Bewegungspfads innerhalb des Arbeitsbereichs eingerichtet ist.

Ferner geht die Erfindung aus von einem System mit zumindest einem erfindungsgemäßen Arbeitsgerät und mit zumindest einer Servereinheit, insbesondere einem Cloud-Server.

Es wird vorgeschlagen, dass das autonome Arbeitsgerät zumindest eine, insbesondere drahtlose, Kommunikationseinheit zu einem Empfang von der Servereinheit mittels eines Verfahrens nach einem der Ansprüche 1 bis 9 ermittelten Steuerdaten, insbesondere Navigationsdaten, aufweist. Die Servereinheit ist vorzugsweise räumlich getrennt von dem autonomen Arbeitsgerät angeordnet, beispielsweise in einem Rechenzentrum, in einer Serverfarm, in einem Bürogebäude o. dgl. Alternativ ist denkbar, dass die Servereinheit innerhalb des Arbeitsbereichs angeordnet ist, beispielhaft in eine Basisstation, insbesondere Ladestation, für das autonome Arbeitsgerät integriert ist. Die Kommunikationseinheit kann insbesondere als ein WLAN-Modul, als ein Mobilfunkmodul, insbesondere ein LTE-Modul, als ein Bluetooth-Modul, als ein Funkmodul oder als eine andere, einem Fachmann als sinnvoll erscheinende Kommunikationseinheit ausgebildet sein. Alternativ ist vorstellbar, dass die Kommunikationseinheit kabelgebunden ausgebildet ist, beispielsweise ein Datenübertragungskabel, Datenübertragungskontakte o. dgl. umfasst. Vorzugsweise ist die Kommunikationseinheit signalübertragungstechnisch, insbesondere über ein Signalübertragungselement, mit der Steuer- und/oder Regeleinheit, insbesondere mit der Navigationseinheit, zu einer Bereitstellung empfangener Steuerdaten, insbesondere Navigationsdaten, verbunden. Vorzugsweise umfasst die Servereinheit zumindest eine, insbesondere zumindest im Wesentlichen analog zu der Kommunikationseinheit des autonomen Arbeitsgeräts ausgebildete, Kommunikationseinheit zu einer Übertragung der ermittelten Steuerdaten, insbesondere Navigationsdaten, an das autonome Arbeitsgerät, insbesondere an die Kommunikationseinheit des autonomen Arbeitsgeräts. Insbesondere ist die Servereinheit zu einer Übertragung der ermittelten Steuerdaten, insbesondere Navigationsdaten, über ein Internet eingerichtet. Alternativ oder zusätzlich ist vorstellbar, dass die Servereinheit dazu eingerichtet ist, die ermittelten Steuerdaten einer externen, insbesondere in der Basisstation für das autonome Arbeitsgerät angeordneten, Kommunikationseinheit bereitzustellen, die insbesondere dazu eingerichtet ist, die empfangenen Steuerdaten dem autonomen Arbeitsgerät, insbesondere der Kommunikationseinheit des autonomen Arbeitsgeräts, bereitzustellen. Vorteilhaft kann auf eine Ermittlung der Steuerdaten durch das autonome Arbeitsgerät verzichtet werden und ein Energieverbrauch des autonomen Arbeitsgeräts gering gehalten werden. Vorteilhaft kann ein autonomes Arbeitsgerät mit einer nutzerfreundlich langen Laufzeit bereitgestellt werden.

Weiterhin wird vorgeschlagen, dass die Servereinheit dazu eingerichtet ist, zumindest einen von der Recheneinheit des autonomen Arbeitsgeräts ermittelten Bewegungspfad des autonomen Arbeitsgeräts zu optimieren, insbesondere mittels eines Verfahrens nach einem der Ansprüche 1 bis 9, und dem autonomen Arbeitsgerät bereitzustellen. Insbesondere kann die Recheneinheit dazu eingerichtet sein, eine Verbesserung der Lösung des generalisierten Rundreiseproblems zur Ermittlung des Bewegungspfads nach einer vorbestimmten Anzahl von Iterationen und/oder nach einer vorbestimmten Zeitdauer zu beenden. Insbesondere kann die Recheneinheit dazu eingerichtet sein, die Verbesserung der Lösung des generalisierten Rundreiseproblems zur Ermittlung des Bewegungspfads nach höchstens 16000 Iterationen und/oder nach einer Zeitdauer von höchstens 60 Sekunden, bevorzugt nach höchstens 8000 Iterationen und/oder nach einer Zeitdauer von höchstens 30 Sekunden und besonders bevorzugt nach höchstens 4000 Iterationen und/oder nach einer Zeitdauer von höchstens 15 Sekunden zu beenden. Vorzugsweise ist die Servereinheit dazu eingerichtet, die von der Recheneinheit ermittelte und insbesondere der Servereinheit von dem autonomen Arbeitsgerät bereitgestellte Lösung weiter zu verbessern, insbesondere mittels weiterer Iterationen. Vorzugsweise ist die Servereinheit dazu eingerichtet, alle Teilbewegungspfade und Übergangspfade, insbesondere alle Knoten, zu ermitteln und dem autonomen Arbeitsgerät zu einer Speicherung, insbesondere in einer Lookup-Tabelle, bereitzustellen. Bevorzugt ist die Recheneinheit des autonomen Arbeitsgeräts dazu eingerichtet, den Bewegungspfad des autonomen Arbeitsgeräts zu einer einmaligen zumindest im Wesentlichen vollständigen Abdeckung jedes Teilgebiets des Arbeitsbereichs in Abhängigkeit von den von der Servereinheit ermittelten und bereitgestellten Teilbewegungspfaden und Übergangspfaden des autonomen Arbeitsgeräts zu ermitteln, insbesondere in Form eines generalisierten Rundreiseproblems. Vorteilhaft kann eine nutzerfreundlich zeitsparende Ermittlung eines optimierten Bewegungspfads ermöglicht werden.

Das erfindungsgemäße Verfahren, das erfindungsgemäße autonome Arbeitsgerät und/oder das erfindungsgemäße System sollen/soll hierbei nicht auf die oben beschriebene Anwendung und Ausführungsform beschränkt sein. Insbesondere können/kann das erfindungsgemäße Verfahren, das erfindungsgemäße autonome Arbeitsgerät und/oder das erfindungsgemäße System zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1    ein erfindungsgemäßes System mit einem erfindungsgemäßen autonomen Arbeitsgerät und mit einer Servereinheit in einer perspektivischen Darstellung,

Fig. 2    ein Ablaufdiagramm eines erfindungsgemäßen Verfahrens in einer schematischen Darstellung,

Fig. 3    eine Lokalisierbarkeitskarte in einer schematischen Darstellung,

Fig. 4    einen Ausschnitt aus der Lokalisierbarkeitskarte aus Fig. 3 in einer schematischen Darstellung,

Fig. 5    ein Teilgebiet eines Arbeitsbereichs in einer schematischen Darstellung,

Fig. 6    eine Diskretisierung über Wahrscheinlichkeitskenngrößen in einer symbolischen schematischen Darstellung,

Fig. 7    einen Ausschnitt eines Arbeitsbereichs in einer schematischen Darstellung,

Fig. 8    den Arbeitsbereich in einer schematischen Darstellung und

Fig. 9    den Arbeitsbereich aus Fig. 8 in einer weiteren schematischen Darstellung.

Beschreibung des Ausführungsbeispiels

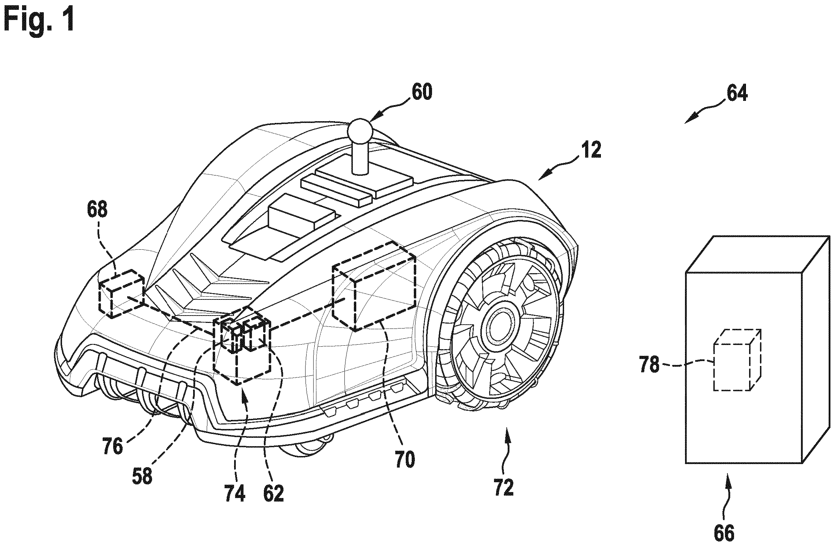

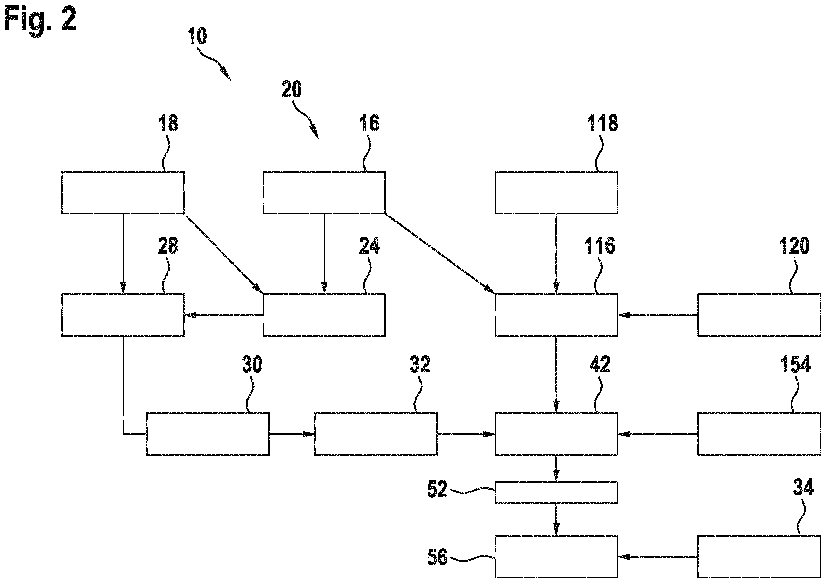

Figur 1 zeigt ein System 64 mit zumindest einem autonomen Arbeitsgerät 12, insbesondere einem autonomen Rasenmäher, und mit einer Servereinheit 66, insbesondere einem Cloud-Server, in einer perspektivischen Darstellung. Bevorzugt umfasst das autonome Arbeitsgerät 12 zumindest eine Navigationseinheit 58 zu einer Navigation innerhalb eines Arbeitsbereichs 14, zumindest eine Sensoreinheit 60 zu einer Erfassung von Arbeitsbereichsdaten und zumindest eine Recheneinheit 62. Bevorzugt ist die Recheneinheit 62 dazu eingerichtet, zumindest eine Wahrscheinlichkeitskenngröße von möglichen Zuständen des autonomen Arbeitsgeräts 12 innerhalb des Arbeitsbereichs 14, die zumindest eine Lokalisierungsunsicherheit, insbesondere eine Sensierungs- und/oder Bewegungsunsicherheit, des autonomen Arbeitsgeräts 12 beschreibt, auszuwerten, insbesondere zu einer Ermittlung zumindest eines den Arbeitsbereich 14 zumindest im Wesentlichen vollständig abdeckenden Bewegungspfads 22 des autonomen Arbeitsgeräts 12. Bevorzugt weist das autonome Arbeitsgerät 12 zumindest eine, insbesondere drahtlose, Kommunikationseinheit 68 zu einem Empfang von der Servereinheit 66 mittels eines, insbesondere in Figur 2 dargestellten, Verfahrens 10, insbesondere zur Steuerung, insbesondere zur Navigation des zumindest einen autonomen Arbeitsgeräts 12, ermittelten Steuerdaten, insbesondere Navigationsdaten, auf.

Das autonome Arbeitsgerät 12 ist insbesondere zu einer autonomen Fortbewegung, insbesondere über einen Untergrund, vorgesehen. Vorzugsweise ist das Verfahren 10 zur Steuerung, insbesondere zur Navigation, des autonomen Arbeitsgeräts 12 in einem zumindest im Wesentlichen zweidimensionalen Arbeitsbereich 14, beispielsweise zur Fortbewegung auf einem Rasen, auf einem Fußboden o. dgl., eingerichtet. Der Arbeitsbereich 14 kann insbesondere als ein Garten, als ein Park, als eine Wohnung, insbesondere als ein Zimmer, oder als ein anderer, einem Fachmann als sinnvoll erscheinender Arbeitsbereich ausgebildet sein. Im vorliegenden Ausführungsbeispiel ist der Arbeitsbereich 14 beispielhaft als ein Garten ausgebildet. Alternativ ist vorstellbar, dass das Verfahren 10 zur Steuerung, insbesondere zur Navigation, des autonomen Arbeitsgeräts 12 in einem dreidimensionalen Arbeitsbereich 14, beispielsweise zur Fortbewegung unter Wasser, in der Luft o. dgl., eingerichtet ist. Alternativ zu einer Ausbildung als ein autonomer Rasenmäher ist denkbar, dass das autonome Arbeitsgerät 12 als ein Saugroboter, als ein Rasenvertikutierroboter, als ein Bodenkehrroboter, als ein Schneeräumroboter, als ein Putzroboter, als eine Arbeitsdrohne, als Poolreinigungsroboter oder als ein anderes, einem Fachmann als sinnvoll erscheinendes autonomes Arbeitsgerät ausgebildet ist. Vorzugsweise ist das autonome Arbeitsgerät 12 dazu vorgesehen, während einer Fortbewegung über einen Untergrund, den Untergrund zu bearbeiten. Insbesondere ist das autonome Arbeitsgerät 12 dazu vorgesehen, einen als einen Rasen ausgebildeten Untergrund zu mähen, einen als einen Fußboden ausgebildeten Untergrund zu saugen und/oder zu putzen o. dgl. Vorzugsweise umfasst das autonome Arbeitsgerät 12 zu einer Bearbeitung eines Untergrunds zumindest eine Bodenbearbeitungseinheit, insbesondere eine Schneideinheit oder eine Trimmereinheit (hier nicht weiter dargestellt).

Vorzugsweise umfasst das autonome Arbeitsgerät 12 zumindest eine Antriebseinheit 70, insbesondere mit zumindest einem Elektromotor, die dazu vorgesehen ist, zumindest eine Antriebsradeinheit 72 des autonomen Arbeitsgeräts 12 zu einer Fortbewegung über einen Untergrund anzutreiben und/oder die Bodenbearbeitungseinheit anzutreiben. Vorzugsweise umfasst das autonome Arbeitsgerät 12 zumindest eine Steuer- und/oder Regeleinheit 74, die zu einer Steuerung und/oder Regelung der Antriebseinheit 70 und/oder der Antriebsradeinheit 72 eingerichtet ist. Insbesondere werden mittels des Verfahrens 10 Steuerdaten, insbesondere Navigationsdaten, für das autonome Arbeitsgerät 12 generiert. Vorzugsweise ist die Recheneinheit 62 dazu eingerichtet, ermittelte Navigationsdaten der Navigationseinheit 58 zu einer Navigation des autonomen Arbeitsgeräts 12 innerhalb des Arbeitsbereichs 14 bereitzustellen. Bevorzugt umfasst die Steuer- und/oder Regeleinheit 74 des autonomen Arbeitsgeräts 12 die Navigationseinheit 58. Insbesondere ist die Steuer- und/oder Regeleinheit 74, insbesondere die Navigationseinheit 58, dazu eingerichtet, in Abhängigkeit von den Steuerdaten die Antriebseinheit 70 und/oder die Antriebsradeinheit 72 zu steuern und/oder zu regeln. Bevorzugt ist das autonome Arbeitsgerät 12, insbesondere die Recheneinheit 62 des autonomen Arbeitsgeräts 12, und/oder zumindest eine externe Recheneinheit, beispielsweise ein Server, ein Mehrzweckcomputer, ein Laptop o. dgl., insbesondere die Servereinheit 66, zu einer Durchführung des Verfahrens 10 eingerichtet. Bevorzugt umfasst die Steuer- und/oder Regeleinheit 74 die Recheneinheit 62 oder ist zumindest teilweise als eine Recheneinheit 62 ausgebildet.

Die Servereinheit 66 ist vorzugsweise räumlich getrennt von dem autonomen Arbeitsgerät 12 angeordnet, beispielsweise in einem Rechenzentrum, in einer Serverfarm, in einem Bürogebäude o. dgl. (hier nicht weiter dargestellt). Alternativ ist denkbar, dass die Servereinheit 66 innerhalb des Arbeitsbereichs 14 angeordnet ist, beispielhaft in eine Basisstation, insbesondere Ladestation, für das autonome Arbeitsgerät 12 integriert ist. Die Kommunikationseinheit 68 kann insbesondere als ein WLAN-Modul, als ein Mobilfunkmodul, insbesondere ein LTE-Modul, als ein Bluetooth-Modul, als ein Funkmodul oder als eine andere, einem Fachmann als sinnvoll erscheinende Kommunikationseinheit ausgebildet sein. Alternativ ist vorstellbar, dass die Kommunikationseinheit 68 kabelgebunden ausgebildet ist, beispielsweise ein Datenübertragungskabel, Datenübertragungskontakte o. dgl. umfasst. Vorzugsweise ist die Kommunikationseinheit 68 signal-übertragungstechnisch, insbesondere über ein Signalübertragungselement 76, mit der Steuer- und/oder Regeleinheit 74, insbesondere mit der Navigationseinheit 58, zu einer Bereitstellung empfangener Steuerdaten, insbesondere Navigationsdaten, verbunden. Vorzugsweise umfasst die Servereinheit 66 zumindest eine, insbesondere zumindest im Wesentlichen analog zu der Kommunikationseinheit 68 des autonomen Arbeitsgeräts 12 ausgebildete, Kommunikationseinheit 78 zu einer Übertragung der ermittelten Steuerdaten, insbesondere Navigationsdaten, an das autonome Arbeitsgerät 12, insbesondere an die Kommunikationseinheit 68 des autonomen Arbeitsgeräts 12. Insbesondere ist die Servereinheit 66 zu einer Übertragung der ermittelten Steuerdaten, insbesondere Navigationsdaten, über ein Internet eingerichtet. Alternativ oder zusätzlich ist vorstellbar, dass die Servereinheit 66 dazu eingerichtet ist, die ermittelten Steuerdaten einer externen, insbesondere in der Basisstation für das autonome Arbeitsgerät 12 angeordneten, Kommunikationseinheit bereitzustellen, die insbesondere dazu eingerichtet ist, die empfangenen Steuerdaten dem autonomen Arbeitsgerät 12, insbesondere der Kommunikationseinheit 68 des autonomen Arbeitsgeräts 12, bereitzustellen.

Bevorzugt ist die Servereinheit 66 dazu eingerichtet ist, zumindest einen von der Recheneinheit 62 des autonomen Arbeitsgeräts 12 ermittelten Bewegungspfad 22 des autonomen Arbeitsgeräts 12 zu optimieren, insbesondere mittels eines, insbesondere in Figur 2 dargestellten, Verfahrens 10, und dem autonomen Arbeitsgerät 12 bereitzustellen. Insbesondere kann die Recheneinheit 62 dazu eingerichtet sein, eine Verbesserung einer Lösung eines generalisierten Rundreiseproblems zur Ermittlung des Bewegungspfads 22 nach einer vorbestimmten Anzahl von Iterationen und/oder nach einer vorbestimmten Zeitdauer zu beenden. Insbesondere kann die Recheneinheit 62 dazu eingerichtet sein, die Verbesserung der Lösung des generalisierten Rundreiseproblems zur Ermittlung des Bewegungspfads 22 nach höchstens 16000 Iterationen und/oder nach einer Zeitdauer von höchstens 60 Sekunden, bevorzugt nach höchstens 8000 Iterationen und/oder nach einer Zeitdauer von höchstens 30 Sekunden und besonders bevorzugt nach höchstens 4000 Iterationen und/oder nach einer Zeitdauer von höchstens 15 Sekunden zu beenden. Vorzugsweise ist die Servereinheit 66 dazu eingerichtet, die von der Recheneinheit 62 ermittelte und insbesondere der Servereinheit 66 von dem autonomen Arbeitsgerät 12 bereitgestellte Lösung weiter zu verbessern, insbesondere mittels weiterer Iterationen. Vorzugsweise ist die Servereinheit 66 dazu eingerichtet, alle Teilbewegungspfade 44, 46 und Übergangspfade 54, insbesondere alle Knoten, zu ermitteln und dem autonomen Arbeitsgerät 12 zu einer Speicherung, insbesondere in einer Lookup-Tabelle, bereitzustellen. Bevorzugt ist die Recheneinheit 62 des autonomen Arbeitsgeräts 12 dazu eingerichtet, den Bewegungspfad 22 des autonomen Arbeitsgeräts 12 zu einer einmaligen zumindest im Wesentlichen vollständigen Abdeckung jedes Teilgebiets 48, 50 des Arbeitsbereichs 14 in Abhängigkeit von den von der Servereinheit 66 ermittelten und bereitgestellten Teilbewegungspfaden 44, 46 und Übergangspfaden 54 des autonomen Arbeitsgeräts 12 zu ermitteln, insbesondere in Form eines generalisierten Rundreiseproblems.

Figur 2 zeigt ein Ablaufdiagramm des Verfahrens 10 zur Steuerung, insbesondere zur Navigation, zumindest eines autonomen Arbeitsgeräts 12, insbesondere eines autonomen Rasenmähers, innerhalb eines Arbeitsbereichs 14, wobei in zumindest einem Verfahrensschritt 16 Arbeitsbereichsdaten, insbesondere Kartendaten des Arbeitsbereichs, erfasst werden, wobei in zumindest einem Verfahrensschritt 18 Sensordaten des autonomen Arbeitsgeräts 12 erfasst werden, in einer schematischen Darstellung. Bevorzugt wird in zumindest einem Verfahrensschritt 20 zumindest eine Wahrscheinlichkeitskenngröße von möglichen Zuständen des autonomen Arbeitsgeräts 12 innerhalb des Arbeitsbereichs 14, die zumindest eine Lokalisierungsunsicherheit, insbesondere eine Sensierungs- und/oder Bewegungsunsicherheit, des autonomen Arbeitsgeräts 12 beschreibt, ausgewertet, insbesondere zu einer Ermittlung zumindest eines den Arbeitsbereich 14 zumindest im Wesentlichen vollständig abdeckenden Bewegungspfads 22 des autonomen Arbeitsgeräts 12.

In dem Verfahrensschritt 16 werden bevorzugt Arbeitsbereichsdaten, insbesondere Kartendaten des Arbeitsbereichs 14, mittels des autonomen Arbeitsgeräts 12 und/oder mittels eines externen Geräts erfasst. Vorzugsweise umfassen die Arbeitsbereichsdaten Informationen über den Arbeitsbereich 14, wie beispielsweise eine Größe des Arbeitsbereichs 14, Grenzen 80 des Arbeitsbereichs 14, insbesondere einen Verlauf von Grenzen 80 des Arbeitsbereichs 14, eine Umgebung des Arbeitsbereichs 14, Hindernisse 36, 38, 40, insbesondere Positionen von Hindernissen 36, 38, 40, in dem Arbeitsbereich 14 oder andere, einem Fachmann als sinnvoll erscheinende Informationen über den Arbeitsbereich 14. Die Arbeitsbereichsdaten können insbesondere als eine SLAM -Karte des Arbeitsbereichs 14, als ein Satellitenbild des Arbeitsbereichs 14, als eine, insbesondere digitale, geografische Karte des Arbeitsbereichs 14, als ein CAD-Modell des Arbeitsbereichs 14 oder als andere, einem Fachmann als sinnvoll erscheinende Arbeitsbereichsdaten ausgebildet sein. Vorzugsweise wird zumindest ein Teil der Arbeitsbereichsdaten mittels des autonomen Arbeitsgeräts 12, insbesondere mittels Sensoren, insbesondere der Sensoreinheit 60, des autonomen Arbeitsgeräts 12, erfasst, beispielsweise während zumindest einer Fortbewegung des autonomen Arbeitsgeräts 12 entlang des Arbeitsbereichs 14, insbesondere einer von einem Benutzer des autonomen Arbeitsgeräts 12 überwachten Einlernfahrt. Alternativ oder zusätzlich ist denkbar, dass zumindest ein Teil der Arbeitsbereichsdaten mittels eines externen Geräts, beispielsweise mittels eines Satelliten, mittels eines Vermessungswerkzeugs, mittels einer Überwachungskamera, mittels eines weiteren autonomen Arbeitsgeräts o. dgl., erfasst wird und insbesondere dem autonomen Arbeitsgerät 12, insbesondere der Recheneinheit 62 des autonomen Arbeitsgeräts 12, und/oder der externen Recheneinheit, insbesondere der Servereinheit 66, bereitgestellt wird.

In dem Verfahrensschritt 18 werden bevorzugt Sensordaten des autonomen Arbeitsgeräts 12, insbesondere Sensordaten der Sensoreinheit 60 des autonomen Arbeitsgeräts 12, erfasst. Insbesondere wird in Abhängigkeit von den erfassten Sensordaten zumindest ein Sensormodell der Sensoreinheit 60 des autonomen Arbeitsgeräts 12 ermittelt. Vorzugsweise wird das Sensormodell außerhalb des Arbeitsbereichs 12, insbesondere in einem Labor, ermittelt. Vorzugsweise ist die Sensoreinheit 60 zu einer Erfassung einer Umgebung des autonomen Arbeitsgeräts 12, insbesondere von Hindernissen 36, 38, 40 in dem Arbeitsbereich 14, Grenzen 80 des Arbeitsbereichs 14 oder von anderen, einem Fachmann als sinnvoll erscheinenden Orientierungspunkten in dem Arbeitsbereich 14 eingerichtet. Die Sensoreinheit 60 ist vorzugsweise als eine exterozeptive Sensoreinheit ausgebildet. Vorzugsweise umfasst die Sensoreinheit 60 zumindest einen Laserscanner, insbesondere einen 2D-Laserscanner. Alternativ oder zusätzlich ist vorstellbar, dass die Sensoreinheit 60 zumindest eine Kamera, insbesondere eine stereoskopische Kamera, einen Ultraschallscanner, einen Radarsensor, einen Lidar-Sensor o. dgl. umfasst. Die Sensordaten können als eine maximale Detektionsentfernung der Sensoreinheit 60, als ein Rauschen in einer Messung der Sensoreinheit 60, als eine Anzahl von erfassten Messwerten pro Messvorgang der Sensoreinheit 60 o. dgl. ausgebildet sein. Beispielsweise ist für die Sensoreinheit 60 mit dem Laserscanner denkbar, dass die Sensoreinheit 60 eine maximale Detektionsentfernung, insbesondere Scanentfernung, von 8 m, ein gaußverteiltes Rauschen in der Messung mit einer Varianz von 3 cm aufweist und dass pro Messvorgang, insbesondere pro Scan, der Sensoreinheit 60 1850 Messwerte erfasst werden. Insbesondere kann in Abhängigkeit von den Sensordaten, insbesondere in Abhängigkeit von dem Sensormodell, zumindest eine Sensierungsunsicherheit des autonomen Arbeitsgeräts 12 ermittelt werden.

Vorzugsweise wird, insbesondere in dem Verfahrensschritt 20, eine Mehrzahl von Wahrscheinlichkeitskenngrößen, insbesondere zumindest eine Wahrscheinlichkeitskenngröße an jeder möglichen Position des autonomen Arbeitsgeräts 12 innerhalb des Arbeitsbereichs 14, ausgewertet. Die Wahrscheinlichkeitskenngröße ist vorzugsweise als eine, insbesondere gaußsche, Wahrscheinlichkeitsverteilung über mögliche Zustände des autonomen Arbeitsgeräts 12 ausgebildet. Bevorzugt wird eine Orientierung des autonomen Arbeitsgeräts 12 unberücksichtigt gelassen. Im Folgenden wird das Verfahren 10 beispielhaft in Abhängigkeit von dem zweidimensionalen Arbeitsbereich 14 beschrieben. In dem zweidimensionalen Arbeitsbereich 14 wird ein Zustand des autonomen Arbeitsgeräts 12 vorzugsweise durch eine Position $(x, y)$ des autonomen Arbeitsgeräts 12, insbesondere innerhalb des Arbeitsbereichs 14, beschrieben, wobei $(x, y)$ ein Koordinatenpaar aus einer Flächenkoordinate $x$ und aus einer weiteren Flächenkoordinate $y$ ist. Vorzugsweise ist die Wahrscheinlichkeitskenngröße mit einem $B$ gekennzeichnet. Insbesondere wird die Wahrscheinlichkeitskenngröße $B$ beschrieben durch eine Normalverteilung $\mathcal{N}(\mu_B, \Sigma_B)$:

$$B \sim \mathcal{N}(\mu_B, \Sigma_B),$$

wobei $\mu_B$ ein Erwartungswert der Wahrscheinlichkeitskenngröße ist, wobei

$$\Sigma_B = \begin{bmatrix} \sigma_x^2 & \sigma_{xy}^2 \\ \sigma_{xy}^2 & \sigma_{yy}^2 \end{bmatrix}$$

und wobei $\sigma^2$ eine Varianz der Wahrscheinlichkeitskenngröße ist. Vorzugsweise wird eine Entwicklung der Wahrscheinlichkeitskenngröße simuliert und modelliert, insbesondere rekursiv mittels eines Erweiterten Kalman-Filters, mittels einer Gauß-Verteilung, mittels eines Partikelfilters o. dgl., wie das autonome Arbeitsgerät 12 Informationen über einen Zustand des autonomen Arbeitsgeräts 12 durch die, insbesondere exterozeptive, Sensoreinheit 60 gewinnt und durch einen Odometrie-Drift verliert. Insbesondere ist die Bewegungsunsicherheit des autonomen Arbeitsgeräts 12 desto größer, je größer der Odometrie-Drift des autonomen Arbeitsgeräts 12 ist.

Die Wahrscheinlichkeitskenngröße beschreibt insbesondere eine Lokalisierungsunsicherheit des autonomen Arbeitsgeräts 12 innerhalb des Arbeitsbereichs 14. Vorzugsweise ist die Lokalisierungsunsicherheit des autonomen Arbeitsgeräts 12 desto größer, je größer die Sensierungsunsicherheit und die Bewegungsunsicherheit des autonomen Arbeitsgeräts 12 sind. Die Sensierungsunsicherheit ist insbesondere abhängig von den Arbeitsbereichsdaten und von dem Sensormodell der Sensoreinheit 60 des autonomen Arbeitsgeräts 12. Insbesondere ist die Sensierungsunsicherheit desto kleiner, je mehr und je genauere Arbeitsbereichsdaten erfasst werden und je genauer das Sensormodell ist. Vorzugsweise war das autonome Arbeitsgerät 12 nach einer Fortbewegung entlang des den Arbeitsbereich 14 zumindest im Wesentlichen vollständig abdeckenden Bewegungspfads 22 zumindest einmal an jeder möglichen Position innerhalb des Arbeitsbereichs 14, hat insbesondere einen zumindest im Wesentlichen vollständigen Untergrund in dem Arbeitsbereich 14 bearbeitet.

Bevorzugt werden in zumindest einem weiteren Verfahrensschritt 24 die Arbeitsbereichsdaten und die Sensordaten zu einer Ermittlung zumindest einer Lokalisierbarkeitskarte 26, die eine Lokalisierungswahrscheinlichkeit des autonomen Arbeitsgeräts 12 an jeder Position innerhalb des Arbeitsbereichs 14 angibt, ausgewertet. Bevorzugt werden die Arbeitsbereichsdaten als zumindest im Wesentlichen fehlerfrei angenommen. Insbesondere wird die Umgebung des autonomen Arbeitsgeräts 12, insbesondere zumindest die Grenzen 80 des Arbeitsbereichs 14, als statisch angenommen. Vorzugsweise werden die Sensordaten zu einer Ermittlung des Sensormodells, insbesondere in einem Labor, ausgewertet. Vorzugsweise werden die, insbesondere ausgewerteten, Arbeitsbereichsdaten zu einer Ermittlung der Lokalisierbarkeitskarte 26 mit dem Sensormodell kombiniert.

Bevorzugt kann in Abhängigkeit von der Lokalisierbarkeitskarte 26 abgeschätzt werden, wie Messungen an jeder Position innerhalb des Arbeitsbereichs 14 eine Lokalisierung des autonomen Arbeitsgeräts 12 beeinflussen, insbesondere unter Nutzung eines im Folgenden beschriebenen Ansatzes. Vorzugsweise wird eine Messung, beispielsweise ein Laserscan, simuliert, insbesondere mittels einer Feldvergleich-Punktwolke oder einer SLAM-Karte und mittels des Sensormodells. Insbesondere wird die simulierte Messung wiederholt um eine vorbestimmte Distanz innerhalb eines vorbestimmten Konvergenzradius translatorisch verschoben und/oder rotiert. Vorzugsweise werden die verschobenen und/oder rotierten Messungen mit den Arbeitsbereichsdaten, insbesondere mit einer Karte des Arbeitsbereichs 14, kombiniert, insbesondere zu einer Ermittlung einer Kovarianz von Positionen, zu denen konvergiert wurde. Je kleiner die resultierende Kovarianz einer Position ist, desto mehr für eine Lokalisierung nützliche Merkmale, wie beispielsweise ein Vorhandensein eines Eckpunkts, eines Baums, einer Hauswand o. dgl., umfasst ein erfasster Teil der Umgebung des autonomen Arbeitsgeräts 12 an der Position. Je kleiner die resultierende Kovarianz einer Position ist, desto höher ist eine Wahrscheinlichkeit, dass mittels eines Abgleichs von dem Sensormodell mit den Arbeitsbereichsdaten eine tatsächliche Position der Messung wiedergefunden werden kann. Zu einer Ermittlung der Lokalisierbarkeitskarte 26 wird der oben beschriebene Ansatz für jede Position des Arbeitsbereichs 14 angewandt. Alternativ ist denkbar, dass die ermittelte Lokalisierbarkeitskarte 26 weiterverarbeitet wird, beispielhaft als eine Schätzung eines Aktualisierungsschritts eines Erweiterten Kalman-Filters. Vorzugsweise umfasst die Lokalisierbarkeitskarte 26 einen erwarteten Informationsgewinn der, insbesondere exterozeptiven, Sensoreinheit 60 an jeder Position innerhalb des Arbeitsbereichs 14. Es ist denkbar, dass die Lokalisierbarkeitskarte 26 in weiteren Verfahrensschritten mittels neu erfasster Informationen, insbesondere mittels neu erfasster Arbeitsbereichsdaten und/oder Sensordaten, verbessert wird.

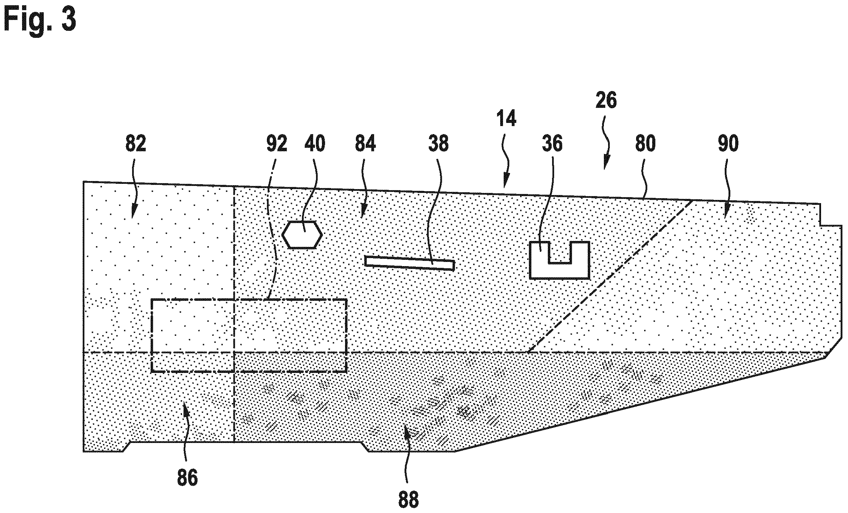

Figur 3 zeigt die Lokalisierbarkeitskarte 26 in einer schematischen Darstellung. Die Lokalisierbarkeitskarte 26 ist insbesondere in unterschiedliche Bereiche 82, 84, 86, 88, 90, in denen das autonome Arbeitsgerät 12 unterschiedliche Lokalisierungswahrscheinlichkeiten aufweist. In einem ersten Bereich 82 und in einem fünften Bereich 90 weist das autonome Arbeitsgerät 12 insbesondere eine größere Lokalisierungswahrscheinlichkeit auf als in einem zweiten Bereich 84, in einem dritten Bereich 86 und in einem vierten Bereich 88. Insbesondere weisen die Lokalisierungswahrscheinlichkeiten des autonomen Arbeitsgeräts 12 in dem ersten Bereich 82 und in dem fünften Bereich 90 zumindest größtenteils eine Summe von Eigenwerten von höchstens 10 cm auf. Insbesondere weisen die Lokalisierungswahrscheinlichkeiten des autonomen Arbeitsgeräts 12 in dem zweiten Bereich 84, in dem dritten Bereich 86 und in dem vierten Bereich 88 zumindest größtenteils eine Summe von Eigenwerten von zumindest 100 cm auf.

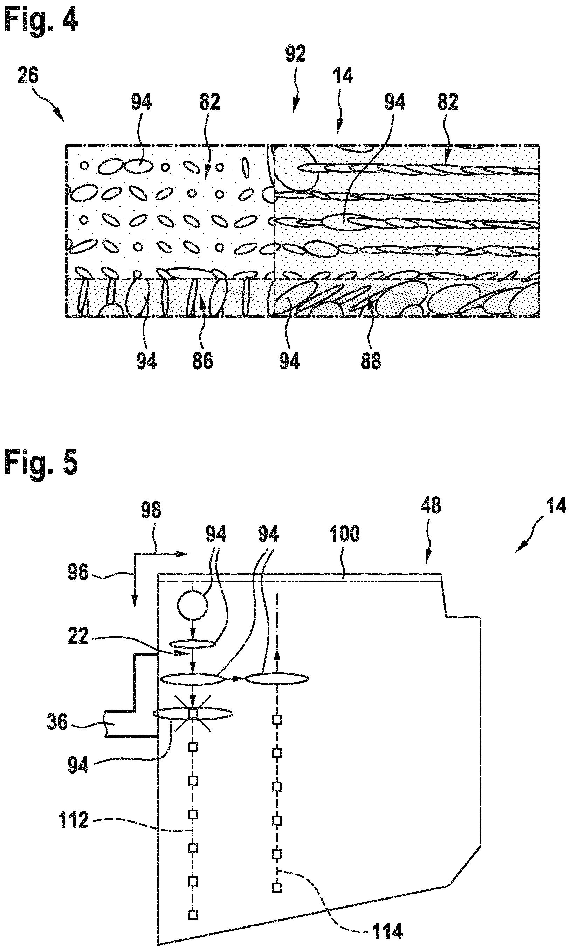

Figur 4 zeigt einen, insbesondere in Figur 3 markierten, Ausschnitt 92 aus der Lokalisierbarkeitskarte 26 aus Fig. 3 in einer schematischen Darstellung. Die Lokalisierungswahrscheinlichkeiten des autonomen Arbeitsgeräts 12 an unterschiedlichen Positionen innerhalb des Arbeitsbereichs 14 sind insbesondere mittels Fehlerellipsen 94 dargestellt. Insbesondere ist eine Fehlerellipse 94 an einer Position desto größer, je kleiner die Lokalisierungswahrscheinlichkeit des autonomen Arbeitsgeräts 12 an der Position ist. Im vorliegenden Ausführungsbeispiel weisen die größten Fehlerellipsen 94 beispielhaft einen maximalen Durchmesser von höchstens 1 m auf.

Bevorzugt wird in zumindest einem weiteren Verfahrensschritt 28 die Lokalisierbarkeitskarte 26 mit zumindest einem Bewegungsmodell, insbesondere einem Odometrie-Drift, des autonomen Arbeitsgeräts 12 zu einer Ermittlung der zumindest einen Wahrscheinlichkeitskenngröße kombiniert. Insbesondere ist die Lokalisierungsunsicherheit des autonomen Arbeitsgeräts 12 abhängig von dem Bewegungsmodell des autonomen Arbeitsgeräts 12. Insbesondere nimmt die Lokalisierungsunsicherheit des autonomen Arbeitsgeräts 12 ohne Berücksichtigung der Lokalisierbarkeitskarte 26 mit zunehmender zurückgelegter Pfadlänge in jeder Dimension, beispielsweise in x-Richtung 98 und in y-Richtung 96, zu. Vorzugsweise beeinflusst die Lokalisierbarkeitskarte 26, insbesondere der Informationsgewinn durch die, insbesondere exterozeptive, Sensoreinheit 60, die von dem Bewegungsmodell abhängige Lokalisierungsunsicherheit des autonomen Arbeitsgeräts 12.

Figur 5 zeigt ein Teilgebiet 48 des Arbeitsbereichs 14 in einer schematischen Darstellung. Beispielsweise ist denkbar, dass während einer Fortbewegung des autonomen Arbeitsgeräts 12 in y-Richtung 96 die Lokalisierungsunsicherheit des autonomen Arbeitsgeräts 12 in x-Richtung 98 aufgrund des Odometrie-Drifts des autonomen Arbeitsgeräts 12 zunimmt, aber in y-Richtung 96 aufgrund eines in x-Richtung 98 verlaufenden, von der, insbesondere exterozeptiven, Sensoreinheit 60 erfassten Orientierungsmerkmals 100, beispielhaft einer Hauswand, konstant bleibt. Die Änderung der Lokalisierungsunsicherheit des autonomen Arbeitsgeräts 12 ist insbesondere durch die Fehlerellipsen 94 dargestellt.

Vorzugsweise kann durch eine Kombination der Lokalisierbarkeitskarte 26 mit dem Bewegungsmodell des autonomen Arbeitsgeräts 12 eine Lokalisierungswahrscheinlichkeit des autonomen Arbeitsgeräts 12 entlang eines jeden beliebigen Bewegungspfads 22 innerhalb des Arbeitsbereichs 14 vorausberechnet werden. Vorzugsweise bildet die Gesamtheit aller Wahrscheinlichkeitskenngrößen des autonomen Arbeitsgeräts 12 einen Raum, der definiert ist als ein Satz aller Wahrscheinlichkeitsverteilungen über die Zustände des autonomen Arbeitsgeräts 12 und der insbesondere als ein *Position* x *Kovarianzen*-Raum angesehen werden kann.

Bevorzugt wird in zumindest einem weiteren Verfahrensschritt 30 die zumindest eine Wahrscheinlichkeitskenngröße zu einer Auswertung diskretisiert, insbesondere durch einen größten Eigenwert der zumindest einen Wahrscheinlichkeitskenngröße. Insbesondere wird der die Gesamtheit aller Wahrscheinlichkeitskenngrößen des autonomen Arbeitsgeräts 12 bildende Raum derart diskretisiert, dass lediglich Wahrscheinlichkeitskenngrößen berücksichtigt werden, die in regelmäßigen Intervallen an Knotenpunkten eines gedachten, den Arbeitsbereich 14 zumindest im Wesentlichen vollständig abdeckenden Gitters angeordnet sind. Vorzugsweise wird jede Wahrscheinlichkeitskenngröße $B$ durch den größten Eigenwert $\bar{\lambda}(B)$ der Wahrscheinlichkeitskenngröße diskretisiert. Insbesondere ist der größte Eigenwert $\bar{\lambda}(B)$ der Wahrscheinlichkeitskenngröße definiert als $\bar{\lambda}(B) = \max(\lambda_1(B), \lambda_2(B))$,

wobei $\lambda_{1,2}(B)$ Eigenwerte über alle Wahrscheinlichkeitskenngrößen von $\Sigma_B$ im zweidimensionalen $(x, y)$-Raum sind. Vorzugsweise ist eine diskretisierte Kovarianz über alle Wahrscheinlichkeitskenngrößen definiert als

$$\Sigma_{B_{diskretisiert}} = \begin{bmatrix} \bar{\lambda}(B)^2 & 0 \\ 0 & \bar{\lambda}(B)^2 \end{bmatrix}.$$

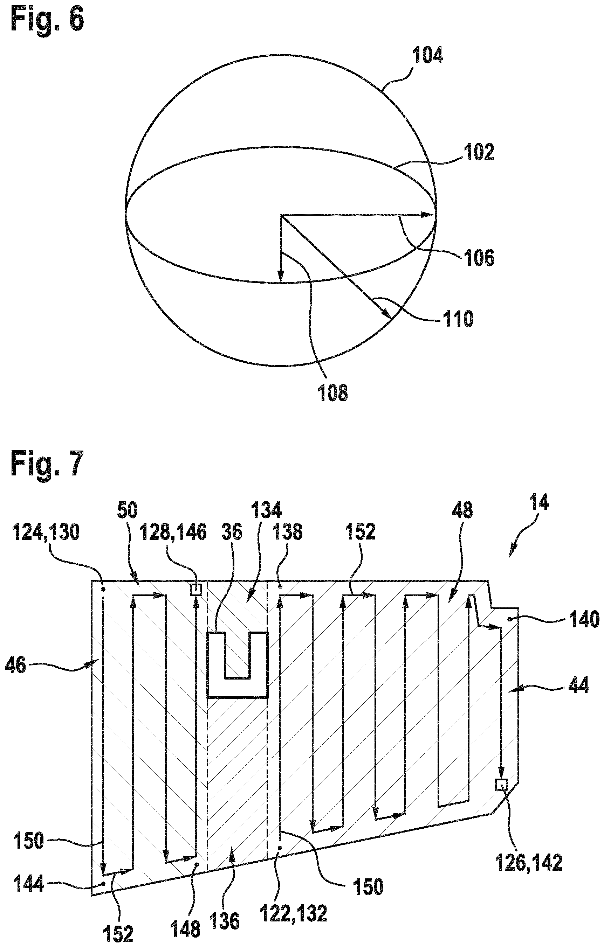

Figur 6 zeigt die Diskretisierung über Wahrscheinlichkeitskenngrößen $\Sigma_B$ in einer symbolischen schematischen Darstellung. Die Kovarianz über alle Wahrscheinlichkeitskenngrößen $\Sigma_B$ ist insbesondere durch eine Ellipse 102 symbolisiert. Die diskretisierte Kovarianz über alle Wahrscheinlichkeitskenngrößen $\Sigma_{B_{diskretisiert}}$ ist insbesondere durch eine weitere Ellipse 104 symbolisiert. Ein erster Eigenwert $\lambda_1(B)$ einer Gaußverteilung mit Kovarianz $\Sigma_B$ über die Wahrscheinlichkeitskenngrößen ist durch einen ersten Pfeil 106 symbolisiert. Ein zweiter Eigenwert $\lambda_2(B)$ der Gaußverteilung mit Kovarianz $\Sigma_B$ über die Wahrscheinlichkeitskenngrößen ist durch einen zweiten Pfeil 108 symbolisiert. Eine Diskretisierung erfolgt insbesondere über den größten Eigenwert $\bar{\lambda}(B)$, der insbesondere durch einen dritten Pfeil 110 symbolisiert ist. Vorzugsweise entspricht die Diskretisierung über den größten Eigenwert $\bar{\lambda}(B)$ einer gauß'schen Wahrscheinlichkeitsverteilung mit Kovarianzmatrix $\Sigma_{B_{diskretisiert}}$.

Bevorzugt wird in zumindest einem weiteren Verfahrensschritt 32 die zumindest eine Wahrscheinlichkeitskenngröße, insbesondere die zumindest eine diskretisierte Wahrscheinlichkeitskenngröße, zu einer Auswertung in Unsicherheitslevel quantisiert. Insbesondere wird jede Wahrscheinlichkeitskenngröße, insbesondere jede diskretisierte Wahrscheinlichkeitskenngröße, in eines von $\|U\|$ Intervallen von Unsicherheit mit einer Größe $\delta$ quantisiert. Alternativ ist

vorstellbar, dass die Wahrscheinlichkeitskenngrößen, insbesondere die diskretisierten Wahrscheinlichkeitskenngrößen, in Intervalle von Unsicherheit variabler Größe, insbesondere verschieden große Intervalle von Unsicherheit, quantisiert werden. Vorzugsweise ist $\|U\|$ definiert als

$$\|U\| = \frac{\lambda_{max} - \lambda_{min}}{\delta},$$

wobei $\lambda_{max}$ einen größten Eigenwert einer jeden erwarteten Wahrscheinlichkeitskenngröße während eines Betriebs des autonomen Arbeitsgeräts 12 und $\lambda_{min}$ einen kleinsten Eigenwert einer jeden erwarteten Wahrscheinlichkeitskenngröße während eines Betriebs des autonomen Arbeitsgeräts 12 darstellt. Bevorzugt bildet ein jedes $u_b \in U$ ein Unsicherheitslevel einer Wahrscheinlichkeitskenngröße $B$, wobei ein Unsicherheitslevel $u_b$ definiert ist als

$$u_b = \left\lceil \frac{\bar{\lambda}(B) - \lambda_{min}}{\delta} \right\rceil.$$

Erfindungsgemäß wird in zumindest einem Verfahrensschritt 34 zu einer Ermittlung des Bewegungspfads 22 zumindest eine Kollisionswahrscheinlichkeit des autonomen Arbeitsgeräts 12 mit zumindest einem Hindernis 36, 38, 40 in dem Arbeitsbereich 14, die in Abhängigkeit von einer Position des Hindernisses 36, 38, 40 und der zumindest einen Wahrscheinlichkeitskenngröße, insbesondere der Lokalisierungsunsicherheit des autonomen Arbeitsgeräts 12, ermittelt wird, berücksichtigt.

Erfindungsgemäß wird die Kollisionswahrscheinlichkeit des autonomen Arbeitsgeräts 12 an jeder möglichen Position des autonomen Arbeitsgeräts 12 innerhalb des Arbeitsbereichs 14 ermittelt und zur Ermittlung des Bewegungspfads 22 berücksichtigt. Je größer die Lokalisierungsunsicherheit des autonomen Arbeitsgeräts 12 an einer bestimmten Position innerhalb des Arbeitsbereichs 14 ist, desto größer ist insbesondere ein Wahrscheinlichkeitsbereich um die Position, in dem das autonome Arbeitsgerät 12 voraussichtlich angeordnet ist. Vorzugsweise wird bei einer Überschneidung des Wahrscheinlichkeitsbereichs mit dem zumindest einen Hindernis 36, 38, 40, insbesondere bei einer zumindest teilweisen Anordnung des Hindernisses 36, 38, 40 in dem Wahrscheinlichkeitsbereich, eine Kollision des autonomen Arbeitsgeräts 12 mit dem Hindernis 36, 38, 40 angenommen. Vorzugsweise ist der Wahrscheinlichkeitsbereich elliptisch ausgebildet, insbesondere wenn das autonome Arbeitsgerät 12 in x-Richtung 98 und in *y*-Richtung 96 verschiedene Lokalisierungsunsicherheiten aufweist. Der Wahrscheinlichkeitsbereich ist in Figur 5 insbesondere zumindest im Wesentlichen durch die Fehlerellipsen 94 dargestellt. Insbesondere ist denkbar, dass in *y*-Richtung 96 aufgrund einer geringen Lokalisierungsunsicherheit des autonomen Arbeitsgeräts 12 eine zumindest im Wesentlichen kollisionsfreie Fortbewegung und in x-Richtung 98 aufgrund einer großen Lokalisierungsunsicherheit des autonomen Arbeitsgeräts 12 eine mögliche Kollision mit einem Hindernis 36 ermittelt wird (vgl. Figur 5). Vorzugsweise wird der Bewegungspfad 22 des autonomen Arbeitsgeräts 12 in Abhängigkeit von den ermittelten Kollisionswahrscheinlichkeiten des autonomen Arbeitsgeräts 12 angepasst. Beispielsweise ist denkbar, dass bei einer Fortbewegungsstrategie des autonomen Arbeitsgeräts 12 entlang von in *y*-Richtung 96 verlaufenden parallelen Bahnen 112, 114 ein Bewegungspfad 22 ermittelt wird, bei dem das autonome Arbeitsgerät 12 in Abhängigkeit von einer ermittelten möglichen Kollision mit einem Hindernis 36 in *x*-Richtung 98 vor Beendigung einer Bahn 112 auf eine weitere, parallele Bahn 114 entgegen der Richtung des Hindernisses 36 wechselt.

Bevorzugt werden in zumindest einem weiteren Verfahrensschritt 42 unter Berücksichtigung der zumindest einen Wahrscheinlichkeitskenngröße, insbesondere der Lokalisierungsunsicherheit des autonomen Arbeitsgeräts 12, mögliche Teilbewegungspfade 44, 46 des autonomen Arbeitsgeräts 12, die zumindest ein hindernisfreies Teilgebiet 48, 50 des Arbeitsbereichs 14 zumindest im Wesentlichen vollständig abdecken, ermittelt, insbesondere in Form eines generalisierten Rundreiseproblems. Insbesondere umfasst der Arbeitsbereich 14 eine Mehrzahl von hindernisfreien Teilgebieten 48, 50, deren Verlauf, insbesondere deren Grenzen, zumindest teilweise von Positionen von Hindernissen 36, 38, 40 innerhalb des Arbeitsbereichs 14, von den Grenzen 80 des Arbeitsbereichs 14 und/oder von einer Bewegungsstrategie des autonomen Arbeitsgeräts 12, beispielhaft einem Abfahren von parallelen Bahnen 112, 114, abhängig ist/sind. Es ist denkbar, dass die möglichen Teilbewegungspfade 44, 46 unter Berücksichtigung der zumindest einen Wahrscheinlichkeitskenngröße, insbesondere der Lokalisierungsunsicherheit des autonomen Arbeitsgeräts 12, und insbesondere zusätzlich unter Berücksichtigung von zumindest einem weiteren Parameter ermittelt werden. Der weitere Parameter wird vorzugsweise in zumindest einem weiteren Verfahrensschritt 154 festgelegt und/oder ermittelt. Der weitere Parameter kann insbesondere als eine gewünschte, insbesondere maximale oder minimale, Anzahl von Drehungen des autonomen Arbeitsgeräts 12, als ein zu erzeugendes Bearbeitungsmuster, insbesondere Mähmuster, als eine gewünschte, insbesondere maximale oder minimale, Distanz des autonomen Arbeitsgeräts 12 zu Hindernissen 36, 38, 40, als eine gewünschte, insbesondere maximale oder minimale, Pfadlänge, als eine Energieeffizienz oder als ein anderer, einem Fachmann als sinnvoll erscheinender Parameter ausgebildet sein.

Insbesondere wird der Arbeitsbereich 14 in zumindest einem weiteren Verfahrensschritt 116 in die hindernisfreien Teilgebiete 48, 50 aufgeteilt. Vorzugsweise werden als Eingangsparameter für eine Aufteilung des Arbeitsbereichs 14 in die hindernisfreien Teilgebiete 48, 50 eine, insbesondere in zumindest einem weiteren Verfahrensschritt 118 ermittelte und/oder festgelegte, Aufgabe des autonomen Arbeitsgeräts 12 und eine, insbesondere in zumindest einem weiteren Verfahrensschritt 120 ermittelte und/oder festgelegte, Bewegungsstrategie des autonomen Arbeitsgeräts 12 genutzt. Im vorliegenden Ausführungsbeispiel ist die Aufgabe des autonomen Arbeitsgeräts 12 beispielhaft als ein Abdecken, insbesondere Abfahren, des zumindest im Wesentlichen vollständigen Arbeitsbereichs 14 ausgebildet. Im vorliegenden Ausführungsbeispiel ist die Bewegungsstrategie des autonomen Arbeitsgeräts 12 beispielhaft als eine Fortbewegung entlang von parallelen Bahnen 112, 114 ausgebildet.

Bevorzugt werden die Teilgebiete 48, 50 des Arbeitsbereichs 14, insbesondere die möglichen, die Teilgebiete 48, 50 abdeckenden Teilbewegungspfade 44, 46 des autonomen Arbeitsgeräts 12, mittels eines Boustrophedon-Ansatzes, insbesondere mittels eines Boustrophedon-Abdeckungs-Pfadplanungs-Algorithmus, unter Berücksichtigung der Wahrscheinlichkeitskenngrößen ermittelt. Alternativ ist denkbar, dass die Teilgebiete 48, 50 des Arbeitsbereichs 14, insbesondere die möglichen, die Teilgebiete 48, 50 abdeckenden Teilbewegungspfade 44, 46 des autonomen Arbeitsgeräts 12, mittels eines Zufälligen-Muster-Ansatzes, mittels eines Gitter-Rundreiseproblem-Ansatzes, mittels eines Neuronalen-Netzwerk-Ansatzes, mittels eines Gitter-lokalen-Energie-Ansatzes, mittels eines Isolinien-Ansatzes, mittels eines Konvex-skalierbaren-Parallelberechnungs-Ansatzes oder mittels eines anderen, einem Fachmann als sinnvoll erscheinenden Ansatzes unter Berücksichtigung der Wahrscheinlichkeitskenngrößen ermittelt werden. Vorzugsweise werden als Eingangsgrößen zur Ermittlung der hindernisfreien Teilgebiete 48, 50, insbesondere der möglichen, die Teilgebiete 48, 50 abdeckenden Teilbewegungspfade 44, 46 des autonomen Arbeitsgeräts 12, zumindest die Grenzen 80 des Arbeitsbereichs 14, insbesondere in Form von Polygonen, eine Morse-Funktion und eine Bahnbreite genutzt. Mittels des Boustrophedon-Ansatzes wird vorzugsweise ein Muster von parallelen Bahnen 112, 114 erzeugt, das den zumindest im Wesentlichen vollständigen Arbeitsbereich 14 abdeckt und das insbesondere Hindernisse 36, 38, 40 durch eine Aufteilung des Arbeitsbereichs 14 in die hindernisfreien Teilgebiete 48, 50 berücksichtigt. Alternativ, insbesondere in Abhängigkeit von einem verschieden von dem Boustrophedon-Ansatz ausgebildeten Ansatz, ist eine Erzeugung von anderen Mustern, beispielsweise von zufälligen Mustern, von Spiralbahnen, von verästelten Baummustern o. dgl., vorstellbar. Vorzugsweise ist ein hindernisfreies Teilgebiet 48, 50 durch zwei verschiedene Fortbewegungsarten des autonomen Arbeitsgeräts 12 zumindest im Wesentlichen vollständig von dem autonomen Arbeitsgerät 12 abdeckbar, insbesondere abfahrbar. Insbesondere ist eine erste Fortbewegungsart des autonomen Arbeitsgeräts 12 als eine Fortbewegung entlang der parallelen Bahnen 112, 114 ausgebildet. Insbesondere ist eine zweite Fortbewegungsart des autonomen Arbeitsgeräts 12 als eine Fortbewegung entlang der Hindernisse 36, 38, 40 ausgebildet. Vorzugsweise gibt es unter Berücksichtigung der zwei Fortbewegungsarten vier verschiedene Möglichkeiten, insbesondere Teilbewegungspfade 44, 46, zu einer Abdeckung eines zumindest im Wesentlichen vollständigen hindernisfreien Teilgebiets 48, 50. Insbesondere weist jeder der vier Teilbewegungspfade 44, 46 einen Startpunkt 122, 124, an dem das autonome Arbeitsgerät 12 beginnt, das Muster abzufahren und einen Austrittspunkt 126, 128, an dem der Teilbewegungspfad 44, 46 endet, auf. Beispielsweise ist für ein zumindest im Wesentlichen rechteckiges hindernisfreies Teilgebiet 48, 50 denkbar, dass ein Startpunkt 124 eines ersten möglichen Teilbewegungspfads 46 an einem oberen linken Eckpunkt ($tl$) 130 des Teilgebiets 50, ein Startpunkt 122 eines zweiten möglichen Teilbewegungspfads 44 an einem unteren linken Eckpunkt ($bl$) 132 des Teilgebiets 48, ein Startpunkt eines dritten möglichen Teilbewegungspfads an einem oberen rechten Eckpunkt ($tr$) des Teilgebiets und ein Startpunkt eines vierten möglichen Teilbewegungspfads an einem unteren rechten Eckpunkt ($br$) des Teilgebiets angeordnet ist.

Figur 7 zeigt einen Ausschnitt des Arbeitsbereichs 14 in einer schematischen Darstellung. Dargestellt sind ein hindernisfreies Teilgebiet 48, ein weiteres hindernisfreies Teilgebiet 50 und zwei zusätzliche hindernisfreie Teilgebiete 134, 136. Das hindernisfreie Teilgebiet 48 umfasst insbesondere einen unteren linken Eckpunkt 132, einen oberen linken Eckpunkt 138, einen oberen rechten Eckpunkt 140 und einen unteren rechten Eckpunkt 142. Das weitere hindernisfreie Teilgebiet 50 umfasst insbesondere einen oberen linken Eckpunkt 130, einen unteren linken Eckpunkt 144, einen oberen rechten Eckpunkt 146 und einen unteren rechten Eckpunkt 148. Beispielhaft ist in dem hindernisfreien Teilgebiet 48 ein möglicher Teilbewegungspfad 44 des autonomen Arbeitsgeräts 12 mit einem Startpunkt 122 an dem unteren linken Eckpunkt 132 des Teilgebiets 48 und mit einem Austrittspunkt 126 an dem unteren rechten Eckpunkt 142 des Teilgebiets 48 dargestellt. Beispielhaft ist in dem weiteren hindernisfreien Teilgebiet 50 ein möglicher Teilbewegungspfad 46 des autonomen Arbeitsgeräts 12 mit einem Startpunkt 124 an dem oberen linken Eckpunkt 130 des weiteren Teilgebiets 50 und mit einem Austrittspunkt 128 an dem oberen rechten Eckpunkt 146 des weiteren Teilgebiets 50 dargestellt. Die erste Fortbewegungsart des autonomen Arbeitsgeräts 12 ist insbesondere durch vierte Pfeile 150 dargestellt. Die zweite Fortbewegungsart des autonomen Arbeitsgeräts 12 ist insbesondere durch fünfte Pfeile 152 dargestellt. Der Übersichtlichkeit halber sind keine Eckpunkte und Teilbewegungspfade der zusätzlichen Teilgebiete 134, 136 dargestellt.

Vorzugsweise werden die Teilbewegungspfade 44, 46 in Form eines generalisierten Rundreiseproblems ermittelt, wobei das generalisierte Rundreiseproblem definiert ist über einen Graphen $G$, wobei

$$G = (V, E, w),$$

wobei V Knoten, E Kanten und w Kantengewichtungen sind. Vorzugsweise sind die Knoten V aufgeteilt in paarweise disjunkte Sätze

$$V = \bigcup_{i \in A} V_i,$$

wobei $A$ ein Satz von hindernisfreien Teilgebieten 48, 50 mit Größe $n$ ist und wobei

$$V_i = \bigcup_{sp \in \{tl, tr, bl, br\}} v_{i,sp},$$

wobei ein Knoten $v_{i,sp}$ zu verstehen ist als eine Lösung eines hindernisfreien Teilgebiets $i$ ausgehend von einem Startpunkt $sp$. Insbesondere ist das generalisierte Rundreiseproblem als ein Problem einer Ermittlung, insbesondere einer Berechnung, einer kostengünstigsten Rundreise, die genau einen Knoten von jedem disjunkten Satz $V_i$ umfasst, ausgebildet. Bevorzugt wird ein Satz von Knoten V ermittelt, insbesondere berechnet, der einen Knoten für jede Lösung aller hindernisfreier Teilgebiete 48, 50 des Arbeitsbereichs 14, Startpunkte 122, 124 und Wahrscheinlichkeitskenngrößen, insbesondere Unsicherheitslevel, umfasst. Insbesondere wird eine Strategie ermittelt, die dazu eingerichtet ist, einen Knoten $v_{i,sp,u}$ zu lösen, der insbesondere zu verstehen ist als eine Lösung eines hindernisfreien Teilgebiets $i$ ausgehend von einem Startpunkt $sp$ mit einem Unsicherheitslevel $u$. Insbesondere wird zur Lösung des Knotens $v_{i,sp,u}$ eine erwartete Entwicklung der Wahrscheinlichkeitskenngröße entlang des Bewegungspfads 22 nachverfolgt und werden sämtliche Bewegungen des autonomen Arbeitsgeräts 12, die zu Kollisionen führen könnten, vermieden durch vorzeitiges Wechseln auf eine benachbarte parallele Bahn 112, 114. Insbesondere können in Abhängigkeit von einer Strategie, insbesondere der Bewegungsstrategie, unabgedeckte, insbesondere unabgefahrene, Regionen innerhalb eines hindernisfreien Teilgebiets 48, 50 verbleiben. Vorzugsweise werden die unabgedeckten Regionen als unabhängige hindernisfreie Teilgebiete angesehen. Insbesondere werden unter Berücksichtigung der zumindest einen Wahrscheinlichkeitskenngröße, insbesondere der Lokalisierungsunsicherheit des autonomen Arbeitsgeräts 12, mögliche Teilbewegungspfade des autonomen Arbeitsgeräts 12, die die unabgedeckten Regionen zumindest im Wesentlichen vollständig abdecken, ermittelt, insbesondere in Form eines lokalen generalisierten Rundreiseproblems. Vorzugsweise wird eine unabgedeckte Region, insbesondere eine Fläche der unabgedeckten Region, gegen eine zurückzulegende Distanz bis zu der unabgedeckten Region abgewogen, insbesondere mittels eines Parameters $\beta$. Beispielsweise ist denkbar, dass zu einer Abdeckung einer unabgedeckten Region mit einer vergleichsweise kleinen Fläche ein Umweg von 50 m vermieden wird.

Vorzugsweise wird ein Satz von Knoten $V_i$ für jedes hindernisfreie Teilgebiet 48, 50 ermittelt, insbesondere berechnet, durch Iterieren über alle hindernisfreien Teilgebiete 48, 50, Startpunkte 122, 124 und Unsicherheitslevel, insbesondere mittels folgender Formel:

$$V_i = \{v_{i,sp,u}\},$$

wobei $\forall i \in A$, wobei $sp \in \{tl, tr, bl, br\}$ und wobei $u \in U$. Die Knoten werden vorzugsweise zur Bildung von V verbunden. Insbesondere umfasst jeder Knoten eine induzierte Austrittswahrscheinlichkeitskenngröße $B_{austritt}(v_{i,sp,u})$, eine Pfadlänge $d(v_{i,sp,u})$ und eine verbleibende unabgedeckte Region $o(v_{i,sp,u})$, insbesondere zu einer Ermittlung, insbesondere Berechnung, von Knotenkosten $c(v_{i,sp,u})$, insbesondere mittels folgender Formel:

$$c(v_{i,sp,u}) = d(v_{i,sp,u}) + \beta \times o(v_{i,sp,u}).$$

Vorzugsweise werden in Abhängigkeit von den Knotenkosten $c(v_{i,sp,u})$ die Kantengewichtungen w ermittelt, insbesondere berechnet.

Bevorzugt werden in zumindest einem weiteren Verfahrensschritt 52 unter Berücksichtigung der zumindest einen Wahrscheinlichkeitskenngröße, insbesondere der Lokalisierungsunsicherheit des autonomen Arbeitsgeräts 12, mögliche Übergangspfade 54 des autonomen Arbeitsgeräts 12 zwischen einer Mehrzahl von Teilgebieten 48, 50 des Arbeitsbereichs 14 ermittelt. Insbesondere werden unter Berücksichtigung der zumindest einen Wahrscheinlichkeitskenngröße mögliche Übergangspfade 54 des autonomen Arbeitsgeräts 12 zwischen aneinander angrenzenden Teilgebieten 48, 50 des Arbeitsbereichs 14 ermittelt. Insbesondere werden zu einer Ermittlung der Übergangspfade 54 die Kanten $E$ und die Kantengewichtungen $w$ ermittelt, insbesondere berechnet. Vorzugsweise umfassen die Kantengewichtungen Zielknotenkosten und Übergangskosten. Bevorzugt werden die Kantengewichtungen w gemäß folgender Formel ermittelt:

$$w(v_i, v_j) = c(v_i, v_j) + c(v_j),$$

wobei $\forall i, j \in$ V, wobei $v_i = v_{i,sp,u}$, wobei $i \in A$, wobei $sp \in \{tl, tr, bl, br\}$, wobei $u \in U$ und wobei $c(v_i, v_j)$ die Übergangskosten eines Übergangs zwischen einem hindernisfreien Teilgebiet $i$ und einem weiteren hindernisfreien Teilgebiet $j$ sind. Der Übergang findet insbesondere statt zwischen $B_{austritt}(v_i)$, dem Startpunkt 124 des weiteren Teilgebiets 50 und den Unsicherheitslevels von $v_j$. Vorzugsweise wird ein Übergangspfad 54 zwischen zwei Teilgebieten 48, 50 ermittelt, der einen Kompromiss zwischen einer finalen Lokalisierungsunsicherheit und Pfadlänge darstellt. Insbesondere wird eine zurückgelegte Pfadlänge mit einer angesammelten Lokalisierungsunsicherheit mittels eines Kompromissparameters $\alpha$, insbesondere durch Nutzung eines Wellenfront-Algorithmus, kombiniert. Vorzugsweise wird ein Übergangspfad 54 für alle (Austrittswahrscheinlichkeitskenngröße, Startpunkt)-Paare ermittelt, insbesondere berechnet, der in Abhängigkeit von $\alpha$ und von der Lokalisierungsunsicherheit des autonomen Arbeitsgeräts 12 an einem Zielknoten $v_j$ ein Unsicherheitslevel $(B_{austritt}(v_i), (v_{j,p,u_{induziert}}))$ induziert, wobei $u_{induziert} \in U$. Insbesondere werden alle Kantengewichtungen derart ermittelt, insbesondere berechnet, dass Kanten, an denen gute Übergangspfade 54 ermittelbar sind, als Kanten mit endlichen Kantenkosten ausgebildet sind, insbesondere gemäß folgender Formel: $w(v_{i_1,sp_1,u_{b1}}, v_{i_2,sp_2,u_{b2}}) =$

$$\begin{cases} c(v_{i_2,sp_2,u_{b2}}) \\ +c(v_{i_1,sp_1,u_{b1}}, v_{i_2,sp_2,u_{b2}}) & wenn\ u_{b2} = u_{induziert} \\ \infty & sonst \end{cases} \cdot$$

Vorzugsweise umfasst jeder Knoten $(n - 1) \times 4 \times$ $\|U\|$ Kanten. Insbesondere gibt es $4 \times \|U\|$ Knoten pro hindernisfreiem Teilgebiet 48, 50. Für den zumindest im Wesentlichen vollständigen Arbeitsbereich 14 ergeben sich insbesondere $16 \times \|U\|^2 \times (n - 1) \times n$ Kanten, wobei $n$ eine Anzahl von hindernisfreien Teilgebieten 48, 50 in dem Arbeitsbereich 14 ist. Vorzugsweise wird lediglich ein einzelner Übergang zwischen jedem (Austrittswahrscheinlichkeitskenngröße, Startpunkt)-Paar berücksichtigt. Insbesondere ergibt sich unter Berücksichtigung eines einzelnen Übergangs zwischen jedem (Austrittswahrscheinlichkeitskenngröße, Startpunkt)-Paar eine Anzahl von endlichen Kanten von $16 \times \|U\| \times (n - 1) \times n$.

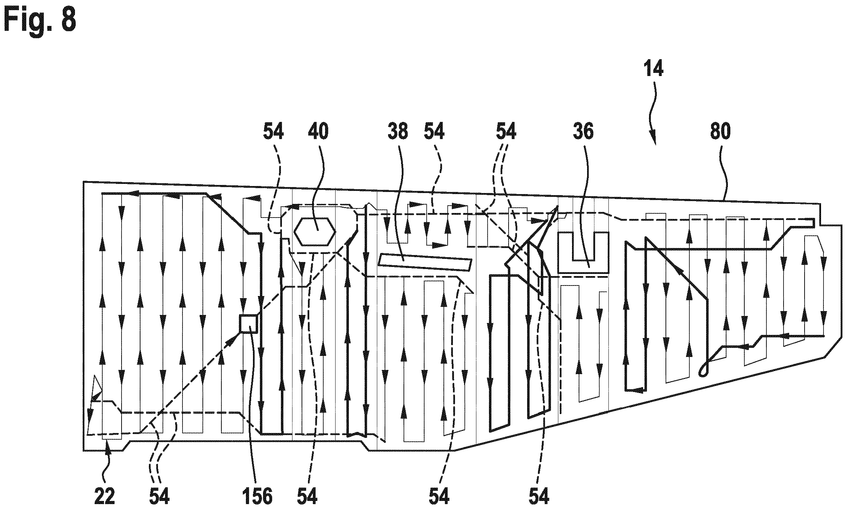

Figur 8 zeigt den Arbeitsbereich 14 in einer schematischen Darstellung. Insbesondere ist der den Arbeitsbereich 14 zumindest im Wesentlichen vollständig abdeckende Bewegungspfad 22 des autonomen Arbeitsgeräts 12 mit einem globalen Startpunkt 156 dargestellt. Der Bewegungspfad 22 umfasst die Übergangspfade 54 zwischen den Teilgebieten 48, 50 des Arbeitsbereichs 14. Die Übergangspfade 54 zwischen den Teilgebieten 48, 50 des Arbeitsbereichs 14 sind der Übersichtlichkeit halber gestrichelt gezeichnet.

Bevorzugt wird in zumindest einem weiteren Verfahrensschritt 56 der Bewegungspfad 22 des autonomen Arbeitsgeräts 12 zu einer einmaligen zumindest im Wesentlichen vollständigen Abdeckung jedes Teilgebiets 48, 50 des Arbeitsbereichs 14 in Abhängigkeit von den möglichen Teilbewegungspfaden 44, 46 und Übergangspfaden 54 des autonomen Arbeitsgeräts 12 ermittelt, insbesondere in Form eines generalisierten Rundreiseproblems. Insbesondere wird ein zusammenhängender Bewegungspfad 22 des autonomen Arbeitsgeräts 12 zu einer einmaligen zumindest im Wesentlichen vollständigen Abdeckung jedes Teilgebiets 48, 50 des Arbeitsbereichs 14 in Abhängigkeit von den möglichen Teilbewegungspfaden 44, 46 und Übergangspfaden 54 des autonomen Arbeitsgeräts 12 ermittelt, insbesondere in Form eines generalisierten Rundreiseproblems. Vorzugsweise wird jeweils ein einzelner Teilbewegungspfad 44, 46 pro jedem Teilgebiet 48, 50 des Arbeitsbereichs 14 mittels der Übergangspfade 54 zu einem zusammenhängenden Bewegungspfad 22 verbunden. Vorzugsweise wird eine Lösung des generalisierten Rundreiseproblems mittels eines Greedy-Algorithmus initialisiert. Insbesondere wird der Greedy-Algorithmus durch ein iteratives Hinzufügen eines nächstgelegenen Knotens von jedem Teilgebiet 48, 50 bis eine vollständige Runde gefunden ist, erstellt. Eine mittels des Greedy-Algorithmus ermittelte Anfangslösung wird vorzugsweise, insbesondere mittels lokaler Suchoperatoren für das generalisierte Rundreiseproblem, verbessert, insbesondere bis ein Abschlusskriterium erfüllt wird. Bevorzugt wird das generalisierte Rundreiseproblem mit einer Priorität hinsichtlich einer Ermittlung eines Bewegungspfads 22, der eine minimale Anzahl von Kollisionen des autonomen Arbeitsgeräts 12 umfasst, gelöst. Alternativ ist denkbar, dass das generalisierte Rundreiseproblem mit einer Priorität hinsichtlich einer Ermittlung eines Bewegungspfads 22, der eine minimale erwartete mittlere Lokalisierungsunsicherheit aufweist, hinsichtlich einer Ermittlung eines Bewegungspfads 22, der eine minimale Pfadlänge aufweist, hinsichtlich einer Ermittlung eines Bewegungspfads 22, der ästhetisch, insbesondere symmetrisch, ansprechende Bearbeitungsmuster, insbesondere Mähmuster, aufweist, oder mit einer Kombination von verschiedenen Prioritäten, insbesondere einer Kombination der vorgenannten Prioritäten, gelöst wird.

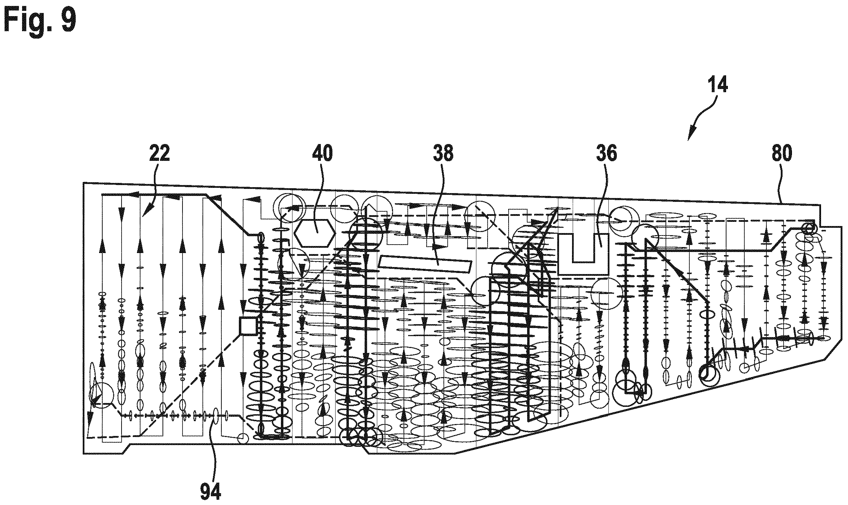

Figur 9 zeigt den Arbeitsbereich 14 aus Fig. 8 in einer weiteren schematischen Darstellung. Eine Entwicklung der Wahrscheinlichkeitskenngröße entlang des Bewegungspfads 22 ist durch Fehlerellipsen 94 dargestellt.

Hinsichtlich weiterer Verfahrensschritte des Verfahrens 10 zur Steuerung, insbesondere zur Navigation, des autonomen Arbeitsgeräts 12 darf auf die vorhergehende Beschreibung des autonomen Arbeitsgeräts 12 und/oder des Systems 64 verwiesen werden, da diese Beschreibung analog auch auf das Verfahren 10 zu lesen ist und somit alle Merkmale hinsichtlich des autonomen Arbeitsgeräts 12 und/oder hinsichtlich des Systems 64 auch in Bezug auf das Verfahren 10 zur Steuerung, insbesondere zur Navigation, des autonomen Arbeitsgeräts 12 als offenbart gelten.

**Patentansprüche**

1. Verfahren zur Steuerung, insbesondere zur Navigation, zumindest eines autonomen Arbeitsgeräts, insbesondere eines autonomen Rasenmähers, innerhalb eines Arbeitsbereichs (14), wobei in zumindest einem Verfahrensschritt (16) Arbeitsbereichsdaten, insbesondere Kartendaten des Arbeitsbereichs, erfasst werden, wobei in zumindest einem Verfahrensschritt (18) Sensordaten des autonomen Arbeitsgeräts erfasst werden, wobei in zumindest einem Verfahrensschritt (20) zumindest eine Wahrscheinlichkeitskenngröße von möglichen Zuständen des autonomen Arbeitsgeräts innerhalb des Arbeitsbereichs (14), die zumindest eine Lokalisierungsunsicherheit, insbesondere eine Sensierungs- und/oder Bewegungsunsicherheit, des autonomen Arbeitsgeräts beschreibt, zu einer Ermittlung zumindest eines den Arbeitsbereich (14) zumindest im Wesentlichen vollständig abdeckenden Bewegungspfads (22) des autonomen Arbeitsgeräts ausgewertet wird, **dadurch gekennzeichnet, dass**

   in zumindest einem Verfahrensschritt (34) zu der Ermittlung des Bewegungspfads (22) zumindest eine Kollisionswahrscheinlichkeit des autonomen Arbeitsgeräts mit zumindest einem Hindernis (36, 38, 40) in dem Arbeitsbereich (14), die in Abhängigkeit von einer Position des Hindernisses (36, 38, 40) und der zumindest einen Wahrscheinlichkeitskenngröße, insbesondere der Lokalisierungsunsicherheit des autonomen Arbeitsgeräts, ermittelt wird, berücksichtigt wird,
   wobei die Kollisionswahrscheinlichkeit des autonomen Arbeitsgeräts an jeder möglichen Position des autonomen Arbeitsgeräts innerhalb des Arbeitsbereichs (14) ermittelt wird und zur Ermittlung des Bewegungspfads (22) berücksichtigt wird.

2. Verfahren nach Anspruch 1, **dadurch gekennzeichnet, dass** in zumindest einem Verfahrensschritt (24) die Arbeitsbereichsdaten und die Sensordaten zu einer Ermittlung zumindest einer Lokalisierbarkeitskarte (26), die eine Lokalisierungswahrscheinlichkeit des autonomen Arbeitsgeräts an jeder Position innerhalb des Arbeitsbereichs (14) angibt, ausgewertet werden.

3. Verfahren nach Anspruch 2, **dadurch gekennzeichnet, dass** in zumindest einem Verfahrensschritt (28) die Lokalisierbarkeitskarte (26) mit zumindest einem Bewegungsmodell, insbesondere einem Odometrie-Drift, des autonomen Arbeitsgeräts zu einer Ermittlung der zumindest einen Wahrscheinlichkeitskenngröße kombiniert wird.

4. Verfahren nach einem der vorhergehenden Ansprüche, **dadurch gekennzeichnet, dass** in zumindest einem Verfahrensschritt (30) die zumindest eine Wahrscheinlichkeitskenngröße zu einer Auswertung diskretisiert wird, wobei der die Gesamtheit aller Wahrscheinlichkeitskenngrößen des autonomen Arbeitsgeräts bildende Raum derart diskretisiert wird, dass lediglich Wahrscheinlichkeitskenngrößen berücksichtigt werden, die in regelmäßigen Intervallen an Knotenpunkten eines gedachten, den Arbeitsbereich (14) zumindest im Wesentlichen vollständig abdeckenden Gitters angeordnet sind.

5. Verfahren nach Anspruch 4, **dadurch gekennzeichnet, dass** in zumindest einem Verfahrensschritt (32) die zumindest eine Wahrscheinlichkeitskenngröße, insbesondere die zumindest eine diskretisierte Wahrscheinlichkeitskenngröße, zu einer Auswertung in Unsicherheitslevel quantisiert wird.

6. Verfahren nach einem der vorhergehenden Ansprüche, **dadurch gekennzeichnet, dass** in zumindest einem Verfahrensschritt (42) unter Berücksichtigung der zumindest einen Wahrscheinlichkeitskenngröße, insbesondere der Lokalisierungsunsicherheit des autonomen Arbeitsgeräts, mögliche Teilbewegungspfade (44, 46) des autonomen Arbeitsgeräts, die zumindest ein hindernisfreies Teilgebiet (48, 50) des Arbeitsbereichs (14) zumindest im Wesentlichen vollständig abdecken, ermittelt werden, insbesondere in Form eines generalisierten Rundreiseproblems.

7. Verfahren nach Anspruch 6, **dadurch gekennzeichnet, dass** in zumindest einem Verfahrensschritt (52) unter Berücksichtigung der zumindest einen Wahrscheinlichkeitskenngröße, insbesondere der Lokalisierungsunsicherheit des autonomen Arbeitsgeräts, mögliche Übergangspfade (54) des autonomen Arbeitsgeräts zwischen einer Mehrzahl von Teilgebieten (48, 50) des Arbeitsbereichs (14) ermittelt werden.

8. Verfahren nach Anspruch 7, **dadurch gekennzeichnet, dass** in zumindest einem Verfahrensschritt (56) der Bewegungspfad (22) des autonomen Arbeitsgeräts zu einer einmaligen zumindest im Wesentlichen vollständigen Abdeckung jedes Teilgebiets (48, 50) des Arbeitsbereichs (14) in Abhängigkeit von den möglichen Teilbewegungspfaden (44, 46) und Übergangspfaden (54) des autonomen Arbeitsgeräts ermittelt wird, insbesondere in Form eines generalisierten Rundreiseproblems.

9. Autonomes Arbeitsgerät, insbesondere autonomer Rasenmäher, mit zumindest einer Navigationseinheit (58) zu einer Navigation innerhalb eines Arbeitsbereichs (14), mit zumindest einer Sensoreinheit (60) zu einer Erfassung von Arbeitsbereichsdaten und mit zumindest einer Recheneinheit (62), wobei die Recheneinheit (62) dazu eingerichtet ist, zumindest eine Wahrscheinlichkeitskenngröße von möglichen Zuständen des autonomen Arbeitsgeräts innerhalb des Arbeitsbereichs (14), die zumindest eine Lokalisierungsunsicherheit, insbesondere eine Sensierungs- und/oder Bewegungsunsicherheit, des autonomen Arbeitsgeräts beschreibt, zu einer Ermittlung zumindest eines den Arbeitsbereich (14) zumindest im Wesentlichen vollständig abdeckenden Bewegungspfads (22) des autonomen Arbeitsgeräts auszuwerten, **dadurch gekennzeichnet, dass** die Recheneinheit (62) dazu eingerichtet ist, dass zu der Ermittlung des Bewegungspfads (22) zumindest eine Kollisionswahrscheinlichkeit des autonomen Arbeitsgeräts mit zumindest einem Hindernis (36, 38, 40) in dem Arbeitsbereich (14), die in Abhängigkeit von einer Position des Hindernisses (36, 38, 40) und der zumindest einen Wahrscheinlichkeitskenngröße, insbesondere der Lokalisierungsunsicherheit des autonomen Arbeitsgeräts, ermittelt wird, berücksichtigt wird, wobei die Kollisionswahrscheinlichkeit des autonomen Arbeitsgeräts an jeder möglichen Position des autonomen Arbeitsgeräts innerhalb des Arbeitsbereichs (14) ermittelt wird und zur Ermittlung des Bewegungspfads (22) berücksichtigt wird.

10. System mit zumindest einem autonomen Arbeitsgerät nach Anspruch 9 und mit zumindest einer Servereinheit (66), insbesondere einem Cloud-Server, **dadurch gekennzeichnet, dass** das autonome Arbeitsgerät zumindest eine, insbesondere drahtlose, Kommunikationseinheit (68) zu einem Empfang von der Servereinheit (66) mittels eines Verfahrens nach einem der Ansprüche 1 bis 9 ermittelten Steuerdaten, insbesondere Navigationsdaten, aufweist.

11. Sysptem nach Anspruch 10, **dadurch gekennzeichnet, dass** die Servereinheit (66) dazu eingerichtet ist, zumindest einen von der Recheneinheit (62) des autonomen Arbeitsgeräts ermittelten Bewegungspfad (22) des autonomen Arbeitsgeräts zu optimieren, insbesondere mittels eines Verfahrens nach einem der Ansprüche 1 bis 9, und dem autonomen Arbeitsgerät bereitzustellen.

**Claims**

1. Method for controlling, in particular navigating, at least one autonomous working device, in particular an autonomous lawn mower, within a working region (14), wherein in at least one method step (16) working region data, in particular map data of the working region, are captured, wherein in at least one method step (18) sensor data of the autonomous working device are captured, wherein in at least one method step (20) at least one probability characteristic of possible states of the autonomous working device within the working region (14) that describes at least a localization uncertainty, in particular a sensing and/or movement uncertainty, of the autonomous working device is evaluated for determining at least one path of movement (22) of the autonomous working device that covers the working region (14) at least substantially completely, **characterized in that**

   in at least one method step (34) at least one collision probability of the autonomous working device with at least one obstacle (36, 38, 40) in the working region (14) that is determined in dependence on a position of the obstacle (36, 38, 40) and the at least one probability characteristic, in particular the localization uncertainty, of the autonomous working device, is taken into consideration for the determination of the path of movement (22), wherein the collision probability of the autonomous working device is determined at each possible position of the autonomous working device within the working region (14) and is taken into consideration for the determination of the path of movement (22).

2. Method according to Claim 1, **characterized in that** in at least one method step (24) the working region data and the sensor data are evaluated for a determination of at least one localizability map (26), which indicates a localization probability of the autonomous working device at each position within the working region (14).

3. Method according to Claim 2, **characterized in that** in at least one method step (28) the localizability map (26) is combined with at least one movement model, in particular an odometry drift, of the autonomous working device for a determination of the at least one probability characteristic.

4. Method according to one of the preceding claims, **characterized in that** in at least one method step (30) the at least one probability characteristic is discretized for an evaluation, wherein the space forming the entirety of all the probability characteristics of the autonomous working device is discretized in such a way that only probability characteristics that are arranged at regular intervals at nodes of an imaginary grid covering the working region (14) at least substantially completely are taken into consideration.

5. Method according to Claim 4, **characterized in that** in at least one method step (32) the at least one probability characteristic, in particular the at least one discretized probability characteristic, is quantized at the uncertainty level for an evaluation.

6. Method according to one of the preceding claims, **characterized in that** in at least one method step (42) possible partial paths of movement (44, 46) of the autonomous working device that cover at least one obstacle-free subregion (48, 50) of the working region (14) at least substantially completely, are determined, in particular in the form of a generalized round-trip problem, while taking into consideration the at least one probability characteristic, in particular the localization uncertainty, of the autonomous working device.

7. Method according to Claim 6, **characterized in that** in at least one method step (52) possible transitional paths (54) of the autonomous working device between a plurality of subregions (48, 50) of the working region (14) are determined while taking into consideration the at least one probability characteristic, in particular the localization uncertainty, of the autonomous working device.

8. Method according to Claim 7, **characterized in that** in at least one method step (56) the path of movement (22) of the autonomous working device is determined, in particular in the form of a generalized round-trip problem, for a one-time at least substantially complete coverage of each subregion (48, 50) of the working region (14) in dependence on the possible partial paths of movement (44, 46) and transitional paths (54) of the autonomous working device.

9. Autonomous working device, in particular autonomous lawn mower, with at least one navigation unit (58) for navigating within a working region (14), with at least one sensor device (60) for capturing working region data and with at least one computing unit (62), wherein the computing unit (62) is configured to evaluate at least one probability characteristic of possible states of the autonomous working device within the working region (14) that describes at least one localization uncertainty, in particular a sensing and/or movement uncertainty, of the autonomous working device for a determination of at least one path of movement (22) of the autonomous working device that covers the working region (14) at least substantially completely, **characterized in that** the computing unit (62) is configured so that at least one collision probability of the autonomous working device with at least one obstacle (36, 38, 40) in the working region (14) that is determined in dependence on a position of the obstacle (36, 38, 40) and the at least one probability characteristic, in particular the localization uncertainty, of the autonomous working device is taken into consideration for the determination of the path of movement (22), wherein the collision probability of the autonomous working device is determined at each possible position of the autonomous working device within the working region (14) and is taken into consideration for the determination of the path of movement (22).

10. System with at least one autonomous working device according to Claim 9 and with at least one server unit (66), in particular a cloud server, **characterized in that** the autonomous working device has at least one, in particular wireless, communication unit (68) for receiving from the server unit (66) control data, in particular navigation data, determined by means of a method according to one of Claims 1 to 9.

11. System according to Claim 10, **characterized in that** the server unit (66) is configured so as to optimize, in particular by means of a method according to one of Claims 1 to 9, at least one path of movement (22) of the autonomous working device that is determined by the computing unit (62) of the autonomous working device and to provide it to the autonomous working device.

**Revendications**

1. Procédé de commande, en particulier de navigation, d'au moins un appareil de travail autonome, en particulier d'une tondeuse à gazon autonome, à l'intérieur d'une zone de travail (14), dans lequel, dans au moins une étape (16) du procédé, des données de la zone de travail, en particulier des données cartographiques de la zone de travail, sont enregistrées, dans lequel, dans au moins une étape (18) du procédé, des données de capteur de l'appareil de travail autonome sont enregistrées, dans lequel, dans au moins une étape de procédé (20), au moins une grandeur caractéristique de probabilité d'états possibles de l'appareil de travail autonome à l'intérieur de la zone de travail (14), qui décrit au moins une incertitude de localisation, en particulier une incertitude de détection et/ou de mouvement, de l'appareil de travail autonome, est évaluée pour déterminer au moins un trajet de mouvement (22) de l'appareil de travail autonome couvrant au moins essentiellement complètement la zone de travail (14), **caractérisé en ce que**

dans au moins une étape du procédé (34) pour déterminer le trajet de déplacement (22), il est pris en compte au moins une probabilité de collision de l'appareil de travail autonome avec au moins un obstacle (36, 38, 40) dans la zone de travail (14), qui est déterminée en fonction d'une position de l'obstacle (36, 38, 40) et dudit au moins un paramètre de probabilité, en particulier de l'incertitude de localisation de l'appareil de travail autonome, la probabilité de collision de l'appareil de travail autonome étant déterminée pour chaque position possible de l'appareil de travail autonome dans la zone de travail (14) et étant prise en compte pour déterminer le trajet de déplacement (22).

2. Procédé selon la revendication 1, **caractérisé en ce que**, dans au moins une étape du procédé (24), les données de la zone de travail et les données des capteurs sont évaluées pour déterminer au moins une carte (26) de possibilités de localisation, qui indique une probabilité de localisation de l'appareil de travail autonome à chaque position dans la zone de travail (14).

3. Procédé selon la revendication 2, **caractérisé en ce que**, dans au moins une étape du procédé (28), la carte (26) de possibilités de localisation est combinée avec au moins un modèle de mouvement, en particulier une dérive odométrique, de l'appareil de travail autonome pour déterminer au moins une grandeur caractéristique de probabilité.

4. Procédé selon l'une des revendications précédentes, **caractérisé en ce que**, dans au moins une étape du procédé (30), ledit au moins un paramètre de probabilité est discrétisé pour une évaluation, l'espace formant l'ensemble de tous les paramètres de probabilité de l'appareil de travail autonome étant discrétisé de telle sorte que seuls les paramètres de probabilité qui sont disposés à intervalles réguliers aux points nodaux d'une grille imaginaire couvrant au moins essentiellement complètement la zone de travail (14) soient pris en compte.

5. Procédé selon la revendication 4, **caractérisé en ce que**, dans au moins une étape du procédé (32), la ou les caractéristiques de probabilité, en particulier la ou les caractéristiques de probabilité discrétisées, sont quantifiées en niveaux d'incertitude en vue d'être évaluées.

6. Procédé selon l'une des revendications précédentes, **caractérisé en ce que**, dans au moins une étape du procédé (42), en tenant compte de la ou des caractéristiques de probabilité, en particulier l'incertitude de localisation de l'appareil de travail autonome, des trajets partiels possibles (44, 46) de l'appareil de travail autonome, qui couvrent au moins essentiellement complètement au moins une zone partielle (48, 50) sans obstacle de la zone de travail (14), sont déterminés, en particulier sous la forme d'un problème de circulation généralisé.

7. Procédé selon la revendication 6, **caractérisé en ce que**, dans au moins une étape (52) du procédé, en tenant compte d'au moins une grandeur caractéristique de probabilité, en particulier de l'incertitude de localisation de l'appareil de travail autonome, on détermine des chemins de transition possibles (54) de l'appareil de travail autonome entre une pluralité de zones partielles (48, 50) de la zone de travail (14).

8. Procédé selon la revendication 7, **caractérisé en ce que**, dans au moins une étape (56) du procédé, le trajet de déplacement (22) de l'appareil de travail autonome est déterminé de manière à couvrir au moins une fois de manière essentiellement complète chaque zone partielle (48, 50) de la zone de travail (14) en fonction des trajets partiels (44, 46) et des trajets de transition (54) possibles de l'appareil de travail autonome, en particulier sous la forme d'un problème de circulation généralisé.

9. Appareil de travail autonome, en particulier tondeuse à gazon autonome, comprenant au moins une unité de navigation (58), pour la navigation à l'intérieur d'une zone de travail (14), au moins une unité de capteur (60), pour la détection de données de zone de travail et avec au moins une unité de calcul (62), l'unité de calcul (62) étant conçue pour évaluer au moins une grandeur caractéristique de probabilité d'états possibles de l'appareil de travail autonome à l'intérieur de la zone de travail (14), qui décrit au moins une incertitude de localisation, en particulier une incertitude de détection et/ou de mouvement, de l'appareil de travail autonome, pour déterminer au moins un trajet de déplacement (22) de l'appareil de travail autonome couvrant au moins essentiellement complètement la zone de travail (14), **caractérisé en ce que**, pour déterminer le trajet de déplacement (22), l'unité de calcul (62) est conçue de telle sorte qu'est prise en compte au moins une probabilité de collision de l'appareil de travail autonome avec au moins un obstacle (36, 38, 40) dans la zone de travail (14), qui est déterminée en fonction d'une position de l'obstacle (36, 38, 40) et de ladite au moins une grandeur caractéristique de probabilité, en particulier de l'incertitude de localisation de l'appareil de travail autonome, la probabilité de collision de l'appareil de travail autonome étant déterminée pour chaque position possible de l'appareil de travail autonome à l'intérieur de la zone de travail (14) et étant prise en compte pour déterminer le trajet de déplacement (22).

**10.** Système comprenant au moins un appareil de travail autonome selon la revendication 9 et au moins une unité serveur (66), en particulier un serveur cloud, **caractérisé en ce que** l'appareil de travail autonome comprend au moins une unité de communication (68), en particulier sans fil, pour recevoir de l'unité serveur (66) des données de commande, en particulier des données de navigation, déterminées au moyen d'un procédé selon l'une des revendications 1 à 9.

**11.** Système selon la revendication 10, **caractérisé en ce que** l'unité serveur (66) est conçue pour optimiser au moins un trajet de déplacement (22) de l'appareil de travail autonome déterminé par l'unité de calcul (62) de l'appareil de travail autonome, en particulier au moyen d'un procédé selon l'une des revendications 1 à 9, et pour le mettre à la disposition de l'appareil de travail autonome.

**Fig. 1**

EP 3 963 417 B1

# Fig. 2

EP 3 963 417 B1

Fig. 3

**Fig. 4**

**Fig. 5**

Fig. 6

Fig. 7

EP 3 963 417 B1

**Fig. 8**

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5793934 A
- US 2014297090 A1
- DE 102015119865 A1